(19) Europäisches Patentamt
European Patent Office
Office européen des brevets

(11) EP 2 203 527 B1

(12) # EUROPÄISCHE PATENTSCHRIFT

(45) Veröffentlichungstag und Bekanntmachung des Hinweises auf die Patenterteilung:
**13.03.2013 Patentblatt 2013/11**

(21) Anmeldenummer: **08804131.4**

(22) Anmeldetag: **12.09.2008**

(51) Int Cl.:
***C09D 5/08*** *(2006.01)*

(86) Internationale Anmeldenummer:
**PCT/EP2008/062168**

(87) Internationale Veröffentlichungsnummer:
**WO 2009/043704 (09.04.2009 Gazette 2009/15)**

(54) **VERFAHREN ZUR KORROSIONSSCHUTZBEHANDLUNG UND ZUM FÜGEN VON METALLTEILEN**

METHOD FOR THE ANTICORROSIVE TREATMENT AND JOINING OF METAL PARTS

PROCÉDÉ DE TRAITEMENT ANTI-CORROSION ET D'ASSEMBLAGE DE PIÈCES MÉTALLIQUES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **27.09.2007 DE 102007046629**
**19.03.2008 DE 102008015103**

(43) Veröffentlichungstag der Anmeldung:
**07.07.2010 Patentblatt 2010/27**

(73) Patentinhaber: **Henkel AG & Co. KGaA**
**40589 Düsseldorf (DE)**

(72) Erfinder:
- **ROTH, Marcel**
  **40589 Düsseldorf (DE)**
- **STODT, Jürgen**
  **41466 Neuss (DE)**
- **MÜLLER, Stephan**
  **40789 Monheim (DE)**
- **WILKE, Eva**
  **42781 Haan (DE)**
- **LORENZ, Wolfgang**
  **40699 Erkrath (DE)**
- **WARK, Reiner**
  **42103 Wuppertal (DE)**
- **SANCHIS OTERO, Guadalupe**
  **40227 Düsseldorf (DE)**
- **HACKBARTH, Karsten**
  **40237 Düsseldorf (DE)**
- **GÖSKE-KRAJNC, Manuela**
  **40721 Hilden (DE)**
- **SUNDERMEIER, Uta**
  **40225 Düsseldorf (DE)**
- **TROLL, Angelika**
  **40593 Düsseldorf (DE)**
- **BÖGE, Kai**
  **41569 Rommerskirchen (DE)**
- **STROMBERG, Christian**
  **40589 Düsseldorf (DE)**

(56) Entgegenhaltungen:
**DE-A1- 19 748 764**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 203 527 B1

Printed by Jouve, 75001 PARIS (FR)

## Beschreibung

Die vorliegende Erfindung betrifft ein Verfahren zur Korrosionsschutzbehandlung und zum Fügen von Metallteilen. Dabei wird in einem Beschichtungsschritt eine leitfähige und schweißbare Korrosionsschutz-Beschichtung aufgebracht, die keine elektrisch leitfähigen Pigmente enthält.

Als elektrisch leitfähig im Sinne der Erfindung soll eine Beschichtung verstanden werden, die nach dem Aushärten unter den üblichen Bedingungen der Fügetechnik in der Automobilindustrie schweißbar, vorzugsweise nach dem Punktschweißverfahren schweißbar ist. Als "schweißbar" im Sinne der vorliegenden Erfindung werden Beschichtungen verstanden, bei denen die erreichbare Schweißpunktzahl (= Standmenge) mindestens 10 % der erreichbaren Schweißpunktzahl (= Standmenge) desselben, aber unbeschichteten Substrates beträgt, bevor die Schweißelektrode ausgewechselt werden muss, weil kein akzeptables Schweißergebnis mehr erzielt wird.

Weiterhin soll die Leitfähigkeit ausreichen, um unter den üblichen Abscheidungsbedingungen von Elektrotauchlacken eine vollständige Abscheidung dieser Lacke zu gewährleisten.

In der Metall verarbeitenden Industrie, insbesondere beim Bau von Kraftfahrzeugen müssen die metallischen Bestandteile der Erzeugnisse vor Korrosion geschützt werden. Dabei besteht aus Gründen der Prozessvereinfachung der Wunsch, den Aufwand für die chemische Korrosionsschutzbehandlung zu verringern. Dies kann dadurch geschehen, dass Rohmaterial in Form von Metallblechen oder Metallbändern eingesetzt wird, das bereits eine Korrosionsschutzschicht trägt.

Es besteht daher Bedarf, einfachere Herstellungsverfahren zu finden, bei denen bereits vorbeschichtete Bleche umgeformt, geschweißt und in bewährter Weise elektrotauchlackiert werden können. So gibt es eine Reihe von Verfahren, bei denen im Anschluß an eine Phosphatierung und/oder Chromatierung im sogenannten Coil-Coating-Verfahren eine mehr oder weniger leitfähige organische Beschichtung aufgebracht wird. Dabei sollen diese organischen Beschichtungen in der Regel so beschaffen sein, dass sie genügende elektrische Leitfähigkeit besitzen, um automobiltypische Schweißverfahren, beispielsweise elektrische Punktschweißverfahren nicht zu beeinträchtigen. Außerdem sollen diese Beschichtungen mit herkömmlichen Elektrotauchlacken beschichtbar sein.

Die Beschichtung von Stahlblechen oder von nach den verschiedensten Verfahren verzinkten und/oder legierungsverzinkten Stahlbleche mit organischen Beschichtungen, die schweißbar sind und die direkt im Walzwerk nach dem sogenannten Coil-Coating-Verfahren aufgebracht werden, ist im Prinzip bekannt.

So beschreibt die DE-C-3412234 einen leitfähigen und schweißbaren Korrosionsschutzprimer für elektrolytisch dünnverzinktes, phosphatiertes oder chromatiertes und verformbares Stahlblech. Dieser Korrosionsschutzprimer besteht aus einer Mischung von über 60 % Zink, Aluminium, Graphit und/oder Molybdändisulfid sowie einem weiteren Korrosionsschutzpigment und 33 bis 35 % eines organischen Bindemittels sowie etwa 2 % eines Dispergierhilfsmittels oder Katalysators. Als organisches Bindemittel werden Polyesterharze und/oder Epoxidharze sowie deren Derivate vorgeschlagen. Konkret genannt werden ein Epoxid/Phenyl-Präkondensat, ein Epoxyester sowie lineare ölfreie Mischpolyester auf Basis Terephthalsäure.

Die EP-A-573015 beschreibt ein organisch beschichtetes Stahl-Verbundblech bestehend aus einer ein oder zweiseitig mit einer Zink oder Zinklegierung beschichteten Oberfläche, die mit einem Chromatfilm versehen ist und einer darauf befindlichen organischen Beschichtung mit einer Schichtstärke von 0,1 bis 5 µm. Die organische Beschichtung ist aus einer Primer-Zusammensetzung gebildet, die aus einem organischen Lösungsmittel, einem Epoxidharz mit einem Molekulargewicht zwischen 500 und 10.000, einem aromatischen Polyamin und einer Phenol- oder Cresolverbindung als Beschleuniger besteht. Weiterhin enthält die Primer-Zusammensetzung ein Polyisocyanat sowie kolloidale Kieselsäure.

In analoger Weise beschreibt die DE-A-3640662 ein oberflächenbehandeltes Stahlblech, umfassend ein zinküberzogenes oder mit einer Zinklegierung überzogenes Stahlblech, einem auf der Oberfläche des Stahlbleches gebildeten Chromatfilm und einer auf dem Chromatfilm gebildeten Schicht einer Harzzusammensetzung. Diese Harzzusammensetzung besteht aus einem basischen Harz, das durch Umsetzung eines Epoxidharzes mit Aminen hergestellt wird, sowie einer Polyisocyanatverbindung.

Die WO 99/24515 offenbart eine leitfähige und schweißbare Korrosionsschutz-Zusammensetzung zur Beschichtung von Metalloberflächen, die

a) 10 bis 40 Gew.-% eines organischen Bindemittels enthaltend

  aa) mindestens ein Epoxidharz
  ab) mindestens einen Härter ausgewählt aus Guanidin, substituierten Guanidinen, substituierten Harnstoffen, cyclischen tertiären Aminen und deren Mischungen
  ac) mindestens ein blockiertes Polyurethanharz

b) 0 bis 15 Gew.-% eines Korrosionsschutzpigments auf Silicatbasis

c) 40 bis 70 Gew.-% pulverförmiges Zink, Aluminium, Graphit und/oder Molybdänsulfid, Ruß, Eisenphosphid
d) 0 bis 30 Gew.-% eines Lösungsmitttels enthalten.

Die WO 01/85860 betrifft eine leitfähige und schweißbare Korrosionsschutz-Zusammensetzung zur Beschichtung von Metalloberflächen dadurch gekennzeichnet, dass sie, bezogen auf die Gesamtzusammensetzung,

a) 5 bis 40 Gew.-% eines organischen Bindemittels enthaltend

aa) mindestens ein Epoxidharz
ab) mindestens einen Härter ausgewählt aus Cyanoguanidin, Benzoguanamin und plastifiziertem Harnstoffharz
ac) mindestens ein Aminaddukt ausgewählt aus Polyoxyalkylentriamin und Epoxidharz-Aminaddukten

b) 0 bis 15 Gew.-% eines Korrosionsschutzpigments
c) 40 bis 70 Gew.-% Leitfähigkeitspigment, ausgewählt aus pulverförmigem Zink, Aluminium, Graphit, Molybdänsulfid, Ruß und Eisenphosphid
d) 0 bis 45 Gew.-% eines Lösungsmitttels
sowie erwünschtenfalls bis zu 50 Gew.-% weitere Wirk- oder Hilfsstoffe enthält, wobei sich die Anteile der Komponenten zu 100 Gew.-% addieren.

Trotz des umfangreichen Standes der Technik besteht weiterhin Bedarf, die bekannten schweißbaren Korrosionsschutz-Beschichtungen weiter zu verbessern. Dabei sollen die schweißbaren Beschichtungen zusätzlich gute Gleiteigenschaften aufweisen, damit die beschichteten Bleche möglichst ohne Beölung umformbar sind. Hierdurch kann zum einen Umformöl eingespart und zum anderen die erforderliche Reinigung vor einer weiteren Überlackierung vereinfacht werden. Hierdurch lässt sich der Materialverbrauch während der gesamten Produktionskette weiter verringern.
Die vorliegende Erfindung stellt sich die Aufgabe, ein Beschichtungs- und Fügeverfahren zur Verfügung zu stellen, welches insbesondere den Materialeinsatz weiter reduziert. In bevorzugten Ausführungsformen sollen die schweißbaren Beschichtungen zusätzlich gute Gleiteigenschaften aufweisen, damit die beschichteten Bleche möglichst ohne Beölung umformbar sind.
Daher betrifft die vorliegende Erfindung in einem ersten Aspekt ein Verfahren zur Korrosionsschutzbehandlung und zum Fügen von Metallteilen, gekennzeichnet durch die in der angegebenen Reihenfolge ausgeführten Schritte:

i) gegebenenfalls korrosionsschützende Erstbehandlung eines Metallblechs oder Metallbands,
ii) Aufbringen eines Beschichtungsmittels auf Basis organischer Polymere auf das Metallblech oder das Metallband, wobei das Beschichtungsmittel keine elektrisch leitfähigen Pigmente enthält, und Aushärten dieses Beschichtungsmittels, wobei das Beschichtungsmittel in einer solchen Nassfilmdicke aufgebracht wird, dass nach dem Aushärten eine Schicht mit einer Dicke im Bereich von 1 bis 3 $\mu$m entsteht,
iii) Zerschneiden des Metallblechs oder Metallbands in Blechteile, die erforderlichenfalls umgeformt werden können,
iv) Fügen der Blechteile miteinander oder mit anderen Blechteilen durch Elektroschweißen unter Verwendung einer Schweißelektrode. Dabei werden vorzugsweise mindestens 10 %, besonders bevorzugt mindestens 30 % der Standmenge des unbeschichteten Blechteils erreicht, bevor die Schweißelektrode wegen des Auftretens von Schweißfehlern ausgewechselt werden muss.

Die Elektro-Schweißbarkeit bis zur Unbrauchbarkeit der Schweißelektrode kann beispielsweise wie folgt beurteilt werden:

Bei der Bestimmung der Standmenge (= Anzahl der Schweißpunkte) werden mit zwei Elektroden so lange Schweißpunkte auf ein Substrat aufgebracht, bis die Schweißpunkte keine Haftung mehr aufweisen aufgrund ungenügender Schweißung durch Degeneration der Elektrode (z.B. Elektrodenabtrag, Aufbau einer isolierenden Schicht auf der Elektrode).
Je nach Substrat kann die Standmenge deutlich abweichen. Erfahrungsgemäß wird die Standmenge jedoch durch Aufbringung einer organischen Schicht herabgesetzt. Ein organisch beschichtetes Substrat gilt dann noch als schweißbar, wenn die erreichbare Schweißpunktzahl (= Standmenge) mindestens 10 % der erreichbaren Schweißpunktzahl (= Standmenge) desselben, aber unbeschichteten Substrates beträgt.

Die Güte der Haftung wird mittels so genannten "Ausknüpfens" bestimmt. Hierzu wird aus dem geschweißten Substrat eine Fläche ausgeschnitten ("Schweißpunktbereich"), auf der ein Schweißpunkt befindlich ist. Anschließend wird mittels Zange und Schraubstock versucht, die beiden durch den Schweißpunkt zusammen gehaltenen Bleche zu trennen (sog. Abrolltest). Hierbei muss der Schweißpunkt der mechanischen Belastung standhalten; das Blech muss

außerhalb des Schweißpunktes ausreißen. Bei schlechter Haftung lösen sich die Bleche vollständig oder teilweise im Bereich der Schweißpunktfläche. Die mechanische Kraft, die hierzu notwendig ist, liegt unter der zur Trennung eines in Ordnung befundenen Schweißpunktes notwendigen Kraft. Die Schweißpunktfläche entspricht hierbei ca. der Auflagefläche der Elektroden. Alternativ zum Ausschneiden eines Schweißpunktbereichs kann man auch zwei Bleche mit einem Schweißpunkt versehen und dann den oben genannten Test zur Trennung der Bleche durchführen.

Erfahrungsgemäß zeigt sich, dass mit den im Schritt ii) im erfindungsgemäßen Verfahren zur Korrosionsschutzbehandlung aufgebrachten und ausgehärteten Beschichtungen unter bestimmten Voraussetzungen besonders hohe relative Standmengen für die verwendeten Schweißelektroden erreicht werden, d.h. eine entsprechend gute Schweißbarkeit der derart beschichteten Metallbleche oder Metallbänder vorliegt. Hierfür ist vorzugsweise mindestens eine der folgenden Bedingungen a) bis d) im Schritt ii) zu erfüllen:

a) das unbeschichtete Metallblech oder Metallband weist vor einer gegebenenfalls vorzunehmenden korrosionsschützenden Vorbehandlung gemäß Schritt i) eine mittlere Rautiefe von zumindest 0,5 $\mu$m, besonders bevorzugt von zumindest 2 $\mu$m, aber nicht mehr als 10 $\mu$m auf;

b) das unbeschichtete Metallblech oder Metallband weist vor einer gegebenenfalls vorzunehmenden korrosionsschützenden Vorbehandlung gemäß Schritt i) eine mittlere Rillenbreite von nicht mehr als 50 $\mu$m, besonders bevorzugt von nicht mehr als 20 $\mu$m auf;

c) das Beschichtungsmittel wird im Schritt ii) in einer solchen Nassfilmdicke aufgebracht, dass diese zumindest der halben mittleren Rautiefe des unbeschichteten Metallblechs oder Metallbands ohne Vorbehandlung gemäß Schritt i), vorzugsweise dieser halben mittleren Rautiefe multipliziert mit dem Korrekturfaktor $\lambda$ entspricht, wobei als Nassfilmdicke der Quotienten aus aufgebrachten Volumen des Beschichtungsmittels und benetzter Oberfläche herangezogen wird und der Korrekturfaktor $\lambda$ sich folgendermaßen berechnet:

$$\lambda = \frac{100 \cdot \delta_{TF}}{FK\% \cdot \delta_B}$$

| | |
|---|---|
| mit FK%: | Festkörperanteil des Beschichtungsmittels in % |
| $\delta_{TF}$: | Dichte des nicht ausgehärteten Trockenfilms nach DIN 53219 gemessen auf Prüfkörpern mit einer mittleren Rautiefe von weniger als 0,5 $\mu$m; |
| $\delta_B$: | Dichte des Beschichtungsmittels; |

d) das Beschichtungsmittel wird im Schritt ii) in einer solchen Nassfilmdicke aufgebracht, dass die Differenz aus Dicke der ausgehärteten Schicht und dem halben Wert der mittleren Rautiefe des unbeschichteten Metallblechs oder Metallbands ohne Vorbehandlung gemäß Schritt i) kleiner als 2 $\mu$m, besonders bevorzugt kleiner als 1 $\mu$m ist, wobei die Dicke der ausgehärteten Schicht derjenigen Schichtdicke des im Schritt ii) aufgebrachten und ausgehärteten Beschichtungsmittels entspricht, die mittels elektrischer und/oder magnetischer Induktionsverfahren nach DIN EN ISO 2808 (Verfahren 6, 7B-D) ohne Korrektur für raue Oberflächen bestimmt wird.

Das Oberflächenprofil des Metallblechs oder Metallbands vor einer korrosionsschützenden Vorbehandlung gemäß Schritt i) kann mit einem Tastschnittgerät nach DIN 4768 erfasst werden, aus dem anschließend die statistischen Größen wie mittlere Rautiefe und mittlere Rillenbreit abgeleitet werden.

Die mittlere Rautiefe bezeichnet dabei den Mittelwert von zumindest fünf größten Höhen des Rauheitsprofils, die innerhalb von fünf unterschiedlichen Messstrecken auf der Metalloberfläche gemessen wurden. Die größte Höhe eines Rauheitsprofils innerhalb einer Einzelmessstrecke ist die Summe aus der Höhe der größten Profilspitze und der Tiefe des größten Profiltales ausgehend von der Profilmittellinie, wobei das Rauheitsprofil mit Mittellinie nach Hochpassfilterung gemäß DIN EN ISO 4287 aufgenommen wird.

Liegt bereits eine der zuvor genannten Bedingungen a) bis d) für die Oberflächenbeschaffenheit des Metallbleches oder des Metallbandes und für die Aufbringung des Beschichtungsmittels im Schritt ii) erfüllt vor, werden die Eigenschaften bezüglich der Schweißbarkeit weiter verbessert. Entsprechend kann die relative Standmenge, also die Anzahl der möglichen Schweißpunkte im Vergleich zum unbeschichteten Metallteil, weitergehend optimiert werden, wenn mehrere der zuvor genannten Bedingungen eingehalten werden, so dass derartige erfindungsgemäße Verfahren besonders bevorzugt sind.

In diesem Zusammenhang sind für einen optimale Benetzung der Oberfläche und eine hinreichende Fließfähigkeit des im Schritt ii) aufgebrachten Nassfilms im erfindungsgemäßen Verfahren solche Beschichtungsmittel bevorzugt, die eine Viskosität von nicht mehr als 500 mPas, vorzugsweise von nicht mehr als 300 mPas aufweisen.

Die korrosionsschützende Erstbehandlung als Teilschritt i) ist im erfindungsgemäßen Verfahren fakultativ. Ihre

Durchführung hängt von der erforderlichen Korrosionsbeständigkeit des fertig gefügten und gegebenenfalls überlackierten Blechteils ab. Soll dieses beispielsweise im Fahrzeugbau mit seinen hohen Anforderungen an den Korrosionsschutz eingesetzt werden, ist dieser Teilschritt empfehlenswert. Er kann bei geringeren Korrosionsschutzanforderungen wie beispielsweise in der Haushaltsgeräteindustrie entfallen.

Sofern Metallbänder beschichtet werden, die unmittelbar zuvor mit einer Metallauflage, beispielsweise mit Zink oder Zinklegierungen, elektrolytisch oder im Schmelztauchverfahren überzogen wurden, ist eine Reinigung der Metalloberflächen vor der Durchführung der korrosionsschützenden Erstbehandlung i), die beispielsweise eine Konversionsbehandlung darstellen kann, nicht erforderlich. Sind die Metallbänder jedoch bereits gelagert worden und insbesondere mit Korrosionsschutzölen versehen, ist ein Reinigungsschritt notwendig, bevor man den Schritt i) durchführt.

Bei der im Schritt i) zur korrosionsschützenden Erstbehandlung einsetzbaren Konversionslösung kann es sich um eine im Stand der Technik bekannte schichtbildende oder nicht schichtbildende Phosphatierlösung handeln. Alternativ lässt sich eine saure Behandlungslösung einsetzen, die als schichtbildende Komponente komplexe Fluoride von Silicium und insbesondere von Titan und/oder Zirkon enthält. Weiterhin kann die Konversionslösung organische Polymere wie beispielsweise Polyacrylate oder aminosubstituierte Polyvinylphenolderivate enthalten. Ein Zusatz von nanoskaliger Kieselsäure oder nanoskaligem Aluminiumoxid zur Konversionslösung im Schritt i) kann zu weiter verbesserten Korrosionsschutz- und Haftungseigenschaften führen. Dabei werden unter "nanoskalig" Teilchen verstanden, die im Mittel einen Teilchendurchmesser von weniger als 1000 nm, insbesondere von weniger als 500 nm aufweisen.

In einer bevorzugten Ausführungsform setzt man im Teilschritt ii) zum Aufbringen der Beschichtung ein Mittel zum Beschichten von Metalloberflächen ein, das in einem organischen Lösungsmittel oder Lösungsmittelgemisch gelöste oder dispergierte organische Harzkomponenten enthält, wobei das Mittel frei ist von elektrisch leitfähigen Pigmenten und mindestens folgende organische Harzkomponenten enthält:

a) als Hydroxylguppen-haltiger Polyether vorliegendes Epoxidharz auf Basis eines Bisphenol-Epichlorhydrin-Polykondensationsproduktes,
b) blockiertes aliphatisches Polyisocyanat,
c) nicht blockiertes aliphatisches Polyisocyanat,
d) mindestens eine Reaktionskomponente ausgewählt aus Hydroxylgruppen-haltigen Polyestern und Hydroxylgruppen-haltigen Poly(meth)acrylaten.

Bei der Komponente a) handelt es sich um ein durchreagiertes Polykondensationsprodukt von Epichlorhydrin und einem Bisphenol. Dieses weist im wesentlichen keine Epoxidgruppen als reaktive Gruppen mehr auf. Das Polymer liegt dann in Form eines Hydroxylgruppen-haltigen Polyethers vor, der über diese Hydroxylgruppen Vernetzungsreaktionen mit beispielsweise Polyisocyanaten eingehen kann.

Die Bisphenol-Komponente dieses Polymers kann beispielsweise ausgewählt sein aus Bisphenol A und Bisphenol F. Die mittlere Molmasse (Zahlenmittel gemäß Herstellerangaben, beispielsweise bestimmbar durch Gelpermeationschromotographie) liegt vorzugsweise im Bereich von 20.000 bis 60.000, insbesondere im Bereich von 30.000 bis 50.000. Die OH-Zahl liegt vorzugsweise im Bereich von 170 bis 210 und insbesondere im Bereich von 180 bis 200. Insbesondere sind Polymere bevorzugt, deren Hydroxylgehalt bezogen auf das Estherharz im Bereich von 5 bis 7 Gew.-% liegt.

Die aliphatischen Polyisocyanate b) und c) basieren vorzugsweise auf HDI, insbesondere auf HDI-Trimer. Als Blockierungsmittel in dem blockierten aliphatischen Polyisocyanat b) können die üblichen Polyisocyanat-Blockierungsmittel eingesetzt sein. Beispielsweise seien genannt: Butanonoxim, Dimethylpyrazol, Malonester, Diisopropylamin/Malonester, Diisopropylamin/Triazol sowie ε-Caprolactam. Bevorzugt wird eine Kombination von Malonester und Diisopropylamin als Blockierungsmittel verwendet.

Der Gehalt an blockierten NCO-Gruppen der Komponente b) liegt vorzugsweise im Bereich von 8 bis 10 Gew.-%, insbesondere im Bereich von 8,5 bis 9,5 Gew.-%. Das Äquivalentgewicht liegt vorzugsweise im Bereich vor 350 bis 600, insbesondere im Bereich von 450 bis 500 g/mol.

Das nicht-blockierte aliphatische Polyisocyanat c) hat vorzugsweise ein Äquivalentgewicht im Bereich von 200 bis 250 g/mol und einen NCO-Gehalt im Bereich von 15 bis 23 Gew.-%. Beispielsweise kann ein aliphatisches Polyisocyanat ausgewählt werden, das ein Äquivalentgewicht im Bereich von 200 bis 230 g/mol, insbesondere im Bereich von 210 bis 220 g/mol und einen NCO-Gehalt im Bereich von 18 bis 22 Gew.-%, vorzugsweise im Bereich von 19 bis 21 Gew.-% aufweist. Ein weiteres geeignetes aliphatisches Polyisocyanat hat beispielsweise ein Äquivalentgewicht im Bereich von 220 bis 250 g/mol, insbesondere im Bereich von 230 bis 240 g/mol und einen NCO-Gehalt im Bereich von 15 bis 20 Gew.-%, vorzugsweise im Bereich von 16,5 bis 19 Gew.-%. Dabei kann jedes dieser genannten aliphatischen Polyisocyanate die Komponente c) darstellen. Als Komponente c) kann jedoch auch ein Gemisch dieser beiden Polyisocyanate vorliegen. Setzt man ein Gemisch der beiden genannten Polyisocyanate ein, so liegt das Mengenverhältnis des erstgenannten Polyisocyanats zum letztgenannten Polyisocyanat für die Komponente c) vorzugsweise im Bereich von 1 : 1 bis 1 : 3.

Die Komponente d) ist ausgewählt aus Hydroxylgruppen-haltigen Polyestern und Hydroxylgruppen-haltigen Poly(meth)acrylaten. Beispielsweise kann ein Hydroxylgruppen-haltiges Poly(meth)acrylat mit einer Säurezahl im Bereich von 3 bis 12, insbesondere im Bereich von 4 bis 9 mg KOH/g eingesetzt werden. Der Gehalt an Hydroxylgruppen liegt vorzugsweise im Bereich von 1 bis 5 und insbesondere im Bereich von 2 bis 4 Gew.-%. Das Äquivalentgewicht liegt vorzugsweise im Bereich von 500 bis 700, insbesondere im Bereich von 550 bis 600 g/mol.

Setzt man als Komponente d) einen Hydroxylgruppen-haltigen Polyester ein, so kann man hierfür einen verzweigten Polyester mit einem Äquivalentgewicht im Bereich von 200 bis 300, insbesondere im Bereich von 240 bis 280 g/mol auswählen. Weiterhin ist beispielsweise ein schwach verzweigter Polyester mit einem Äquivalentgewicht im Bereich von 300 bis 500, insbesondere im Bereich von 350 bis 450 g/mol geeignet. Diese unterschiedlichen Polyester-Typen können jedes für sich oder als Gemisch die Komponente d) bilden. Selbstverständlich kann als Komponente d) auch eine Mischung von Hydroxylgruppen-haltigen Polyestern und Hydroxylgruppen-haltigen Poly(meth)acrylaten vorliegen.

Das erfindungsgemäß einzusetzende Mittel enthält also sowohl ein blockiertes aliphatisches Polyisocyanat b) als auch ein nicht-blockiertes aliphatisches Polyiscyanat c). Als potenzielle Reaktionskomponenten für diese beiden Polyisocyanat-Typen stehen die Hydroxylgruppen-haltigen Komponenten a) und d) zur Verfügung. Durch mögliche Reaktion jeder der Komponenten a) und d) mit jeder der Komponenten b) und c) entsteht beim Aushärten des Mittels ein komplexes Polymer-Netzwerk aus Polyurethanen. Zusätzlich können in dem Fall, dass als Komponente d) Hydroxylgruppen-haltige Poly(meth)acrylate eingesetzt werden, weitere Vernetzungen über die Doppelbindungen dieser Komponenten eintreten. Soweit nicht alle Doppelbindungen der Poly(meth)acrylate beim Aushärten vernetzen, können insbesondere oberflächlich vorhandene Doppelbindungen eine verbesserte Verknüpfung zu einem nachträglich aufgebrachten Lack bewirken, falls dieser ebenfalls Komponenten mit polymerisierbaren Doppelbindungen enthält. Unter diesem Gesichtspunkt ist es bevorzugt, dass die Komponente d) zumindest teilweise aus Hydroxylgruppen-haltigen Poly(meth)acrylaten besteht.

Beim Aushärten des erfindungsgemäß einzusetzenden Mittels ist zu erwarten, dass zunächst das nicht-blokkierte aliphatische Polyisocyanat c) mit einer oder beiden der Komponenten a) und d) reagiert. Sofern die Hydroxylgruppen der Komponenten d) reaktiver sind als diejenigen der Komponente a), tritt beim Aushärten zunächst bevorzugt eine Reaktion der Komponente c) mit der Komponente d) ein.

Dem gegenüber reagiert das blockierte aliphatische Polyisocyanat b) erst dann mit einer oder beiden der Komponenten a) und d), wenn die Deblockierungstemperatur erreicht ist. Zur Polyurethanbildung steht dann nur noch derjenige der Reaktionspartner a) und d) zur Verfügung, der die weniger reaktionsfreudigen OH-Gruppen aufweist. Für das sich ausbildende Polyurethan-Netzwerk bedeutet dies beispielsweise, dass dann, wenn die OH-Gruppen der Komponenten a) reaktionsträger sind als diejenigen Komponenten d), sich zwei Polyurethan-Netzwerke aus der Reaktion der Komponenten c) und d) einerseits und der Komponenten a) und b) andererseits aufbauen.

Das erfindungsgemäß einzusetzende Mittel enthält die Komponenten a) und b) einerseits und c) und d) andererseits vorzugsweise in folgenden relativen Gewichtsverhältnissen:

a) : b) = 1: 0,8 bis 1 : 1,3
c) : d) = 1 : 1,4 bis 1 : 2,3

Die Komponenten a) und d) einerseits sowie b) und c) andererseits liegen vorzugsweise in folgendem relativen Gewichtsverhältnis vor:

a) : d) = 1 : 2 bis 1: 6 und (vorzugsweise 1 : 3 bis 1 : 5)
b) : c) = 1 : 0,5 bis 1 : 5 (vorzugsweise 1 : 1 bis 1 : 3).

Bevorzugte absolute Mengenbereiche der genannten vier Komponenten a) bis d) werden weiter unten angegeben.

Das erfindungsgemäß einzusetzende Mittel enthält zumindest die weiter oben beschriebenen Harzkomponenten sowie Lösungsmittel. Die Harzkomponenten a) bis d) liegen in ihrer Handelsform in der Regel als Lösung bzw. Dispersion in organischen Lösungsmitteln vor. Das hieraus zubereitete erfindungsgemäße Mittel enthält dann ebenfalls diese Lösungsmittel. Diese sind erwünscht, um trotz der möglichen zusätzlichen Anwesenheit von elektrisch nicht leitenden Pigmenten wie insbesondere Korrosionsschutzpigmenten eine Viskosität einzustellen, die es erlaubt, das Beschichtungsmittel im Coil-Coating-Verfahren auf das Substrat aufzubringen. Erforderlichenfalls kann zusätzlich Lösungsmittel zugesetzt werden. Die chemische Natur der Lösungsmittel ist in der Regel durch die Wahl der Rohstoffe, die das entsprechende Lösungsmittel enthalten, vorgegeben. Beispielsweise kann als Lösungsmittel vorliegen: Cyclohexanon, Diacetonalkohol, Diethylenglykolmonobutyletheracetat, Diethylenglykol, Propylenglykolmethylether, Propylenglykol-n-Butylether, Methoxypropylacetat, n-Butylacetat, Xylol, Glutarsäuredimethylester, Adipinsäuredimethylester und/oder Bernsteinsäuredimethylester.

Allgemein gilt für das erfindungsgemäß einzusetzende Mittel, dass es vorzugsweise, bezogen auf die Gesamtmasse des Mittels, 25 bis 60 Gew.-%, vorzugsweise 35 bis 55 Gew.-% organisches Lösungsmittel und 20 bis 45 Gew.-

%, vorzugsweise 25 bis 40) Gew.-%, organische Harzkomponenten enthält, wobei die Summe der Gewichtsprozentanteile von organischer Harzkomponente und Lösungsmittel nicht größer als 93 Gew.-%, vorzugsweise nicht größer als 87 Gew.-% ist und der Rest zu 100 Gew.-% zumindest teilweise aus elektrisch nicht leitenden Korrosionsschutzpigmenten besteht.

Hinsichtlich der einzelnen Harzkomponente a) gilt vorzugsweise, dass das Mittel, bezogen auf die Gesamtmasse des Mittels, 2 bis 8 Gew.-%, vorzugsweise 3 bis 5 Gew.-% der Harzkomponente a) enthält. Aus dem Mengenanteil der Harzkomponente a) lassen sich mit den weiter oben angegebenen bevorzugten Mengenverhältnissen der einzelnen Harzkomponenten die bevorzugten Mengenanteile der Harzkomponenten b) bis d) im erfindungsgemäßen Mittel berechnen. Beispielsweise kann der Anteil der Komponenten b) an der Gesamtmasse des Mittels 2 bis 9 Gew.-%, vorzugsweise 3 bis 6 Gew.-% betragen, der Anteil der Harzkomponenten c) 4 bis 18 Gew.-%, vorzugsweise 6 bis 12Gew.-%, und der Anteil der Harzkomponenten d) 7 bis 30 Gew.-%, vorzugsweise 10 bis 20 Gew.-%.

Nach dem Auftragen des flüssigen Behandlungsmittels im Schritt (ii) wird das beschichtete Blech in dieser Ausführungsform auf die erforderliche Trocknungs- bzw. Vernetzungstemperatur für die organische Beschichtung erwärmt. Das Erwärmen des beschichteten Substrats auf die erforderliche Substrattemperatur ("Peak-metal-temperature" = PMT) im Bereich von 120 bis 260°C, vorzugsweise im Bereich von 150 bis 170°C kann in einem aufgeheizten Durchlaufofen erfolgen. Das Behandlungsmittel kann jedoch auch durch Infrarotstrahlung, insbesondere durch nahe Infrarotstrahlung, auf die entsprechende Trocknungs- bzw. Vernetzungstemperatur gebracht werden.

Alternativ kann man im Teilschritt ii) zum Aufbringen der Beschichtung ein Mittel zum Beschichten von Metalloberflächen auf Basis organischer Polymere einsetzen, das unter Einwirkung energiereicher Strahlung härtbar ist, wobei das Mittel frei ist von elektrisch leitfähigen Pigmenten, und die Beschichtung unter Einwirkung energiereicher Strahlung aushärtet.

Unter "energiereicher Strahlung", die in der Patentliteratur auch häufig als "aktinische Strahlung" bezeichnet wird, ist insbesondere sichtbares oder ultraviolettes (UV) Licht, Röntgenstrahlung, Elektronenstrahlung und Gamma-Strahlung zu verstehen. Dabei werden Elektronenstrahlung oder UV-Strahlung bevorzugt, da sie gute Wirkung mit einfacher Anwendbarkeit verbinden. Die Bestrahlungsdauer beträgt in der Regel mindestens $10^{-5}$ Sekunden und nicht mehr als 10 Sekunden.

Geeignete UV-Strahlung hat Wellenlängen zwischen 200 und 800 nm, vorzugsweise zwischen 250 und 450 nm. Die Strahlungsintensität richtet sich dabei nach der gewünschten Applikationsgeschwindigkeit, dem Initiatorsystem und der Comonomer-Zusammensetzung und kann durch den Fachmann leicht bestimmt werden.

Für die alternativ zu verwendende Elektronenstrahlung kann jede konventionelle Elektronenstrahlquelle eingesetzt werden. Beispielhaft genannt seien

Beschleuniger vom Typ des van de Graaff-Generators, Linearbeschleunigers, Resonanztransformators, oder Dynatrons. Die Elektronenstrahlung hat dabei eine Energie von etwa 50 bis 1000 keV, vorzugsweise zwischen 100 und etwa 300 keV, die resultierende Strahlendosis liegt zwischen etwa 0,1 und 100 Mrad.

Voraussetzung für eine Härtbarkeit unter diesen Bedingungen ist die Anwesenheit von Monomeren oder Präpolymeren mit radikalisch oder ionisch, insbesondere kationisch polymerisierbaren C = C - Doppelbindungen und eines Photoinitiators oder Radikalstarters. Beispielsweise enthält das Mittel zum Beschichten von Metalloberflächen mindestens die folgenden Komponenten: a) mindestens ein Salz oder einen Komplex einer olefinisch ungesättigten polymerisierbaren Carbonsäure oder eines Moleküls, das aus einer olefinisch ungesättigten polymerisierbaren Carbonsäure durch eine Reaktion an der Carboxylgruppe erhältlich ist, mit mindestens einem der Metalle Silizium, Titan, Zirkon, Mangan, Zink, Vanadium, Molybdän und Wolfram, einen Initiator oder ein Initiatorgemisch zur freien radikalischen und/ oder kationischen Polymerisation.

Vorzugsweise enthält das Mittel zusätzlich als Komponente c) mindestens eine weitere polymerisierbare olefinisch ungesättigte Verbindung, insbesondere eine solche, die mindestens eine Carboxyl- oder eine Ester-Gruppe enthält.

Dabei sind vorzugsweise die Komponenten a) und c) in folgenden Gewichtsanteilen relativ zur Gesamtzusammensetzung enthalten: 1 bis 80 Gew.-%, vorzugsweise 1 bis 40 Gew.-% der Komponente a) 20 bis 95 Gew.-%, vorzugsweise 40 bis 90 Gew.-% der Komponente c)

Nähere Informationen und konkrete Beispiele hierzu können der deutschen Patentanmeldung DE 19751153 entnommen werden. Dort wird näher ausgeführt:

> Als olefinisch ungesättigte polymerisierbare Carbonsäure zur Generierung der entsprechenden Titan-, Mangan- oder Zirkoniumsalze eignen sich dabei alle an sich bekannten olefinisch ungesättigten Carbonsäuren die homo- und/oder copolymerisierbar sind: nämlich Acrylsäure, Methacrylsäure, Itaconsäure, Crotonsäure, Maleinsäure, Maleinsäurehalbester, d.h. Ester der Maleinsäure, bei denen eine Carboxylgruppe mit einem Alkylrest verestert ist, Fumarsäure oder Fumarsäurehalbester, reaktive carboxylgruppenhaltige Makromonomere oder Mischungen der vorgenannten Säuren. Unter "Makromonomer" werden im Sinne dieser Erfindung Oligomere oder Polymere mit funktionellen Endgruppen verstanden, über die Polymerisationsreaktionen ablaufen können. Sie sind also prinzipiell

makromolekulare Monomere. In der Regel enthalten diese Makromonomere als Endgruppen ungesättigte C, C-Bindungen, d.h. Vinyl-, Acryl-, Methacryl- oder Styrylgruppen.

Zusätzlich kann die Zusammensetzung weitere copolymerisierbare Comonomere enthalten wie Hydroxyethylacrylat, Hydroxyethylmethacrylat, Hydroxypropylacrylat, Hydroxypropylmethacrylat, Hydroxbutylacrylat, Hydroxybutylmethacrylat, $C_1$-$C_8$-Alkylacrylate oder -methacrylate sowie eine oder mehrere der vorgenannten olefinisch ungesättigten Carbonsäuren in freier Form, d.h. nicht in Salzform. Ein Teil der vorgenannten hydroxyfunktionellen Comonomeren kann auch durch Polyethylenglykol-Halbester der olefinisch ungesättigten polymerisierbaren Carbonsäuren ersetzt werden.

Weiterhin enthalten die erfindungsgemäßen Zusammensetzungen mindestens einen Initiator zur Auslösung der radikalischen Polymerisation. Die Aushärtung der Beschichtung erfolgt dabei durch thermische, Photo- und/oder Elektronenstrahlpolymerisation. Besonders bevorzugt ist die Photopolymerisation, so dass die für die Photopolymerisation geeigneten Beschichtungszusammensetzungen einen Photoinitiator enthalten. Hierfür eignen sich eine Vielzahl kommerziell erhältlicher Photoinitiatoren. Die Zusammensetzungen enthalten Photoinitiatoren in Mengen zwischen 0,1 und 20 Gew.-%, vorzugsweise zwischen 2 und 12 Gew.-%, besonders bevorzugt zwischen 3 und 8 Gew.-%.

Beispiele für geeignete Photoinitiatoren sind Benzoine, Benzoinalkylether, Benzilketale wie z.B. Benzildimethylketal, Acetophenonderivate wie z.B. Dialkylacetophenone oder auch Dichlor- und Trichloracetophenone, Beispiele für kommerziell erhältliche Photoinitiatoren der vorgenannten Art sind Irgacure® 651 bzw. 907 der Firma Ciba Geigy. Weitere geeignete Photoinitiatoren sind Irgacure® 500, 819, 184, 2959 oder Darocur® 1173 von Ciba Geigy sowie Esacure® KIP 100F von Lamberti.

Neben den vorgenannten Photoinitiatoren oder anstelle dieser können die erfindungsgemäßen Zusammensetzungen auch frei radikalische Initiatoren vom Typ der Peroxide, z.B. Benzylperoxid oder Azoverbindungen z.B. 2,2'-Azobisisobutylnitril enthalten. Im Falle der ausschließlich thermisch durchgeführten Polymerisation enthalten die Zusammensetzungen selbstverständlich keinen Photoinitiator."

Die erfindungsgemäßen polymerisierbaren Zusammensetzungen enthalten solche Mengen des Titan-, Mangan- und/oder Zirkoniumsalzes der olefinisch ungesättigten Carbonsäure, daß in der Beschichtung ein Metallgehalt von 0,5 bis 15, bevorzugt von 1 bis 8 % resultiert, sowie bis zu 90 Gew.-% eines oder mehrerer der Comonomeren und zwischen 2 und 10 % des Initiators.

Wenn Alkylacrylate und/oder Alkylmethacrylate als Comonomere verwendet werden, so sollten insbesondere die längerkettigen Alkylverbindungen in untergeordneter Menge zugegen sein, da sonst die Zusammensetzungen langfristig nicht homogen bleiben. Außerdem wird ein geringerer Korrosionsschutz derartiger Zusammensetzungen beobachtet. In der Regel sollte der Anteil Alkylacrylaten insbesondere beispielsweise das 2-Ethylhexylacrylat deutlich weniger als 50 % der carboxy- und/oder hydroxyfunktionellen Comonomeren betragen.

In einer weiteren bevorzugten Ausführungsform kann ein strahlenhärtbares Beschichtungsmittel eingesetzt werden, wie es in WO 00/69978 näher beschrieben ist. Hierbei handelt es sich um ein polymerisierbares chromfreies Korrosionsschutzmittel, enthaltend

a) Metallkomplexe einer $\alpha$-ungesättigten Carbonsäure der allgemeinen Formel (1):

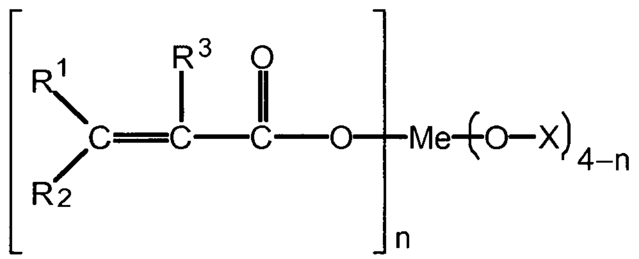

(1)

worin $R^1$ und/oder $R^2$ H, $C_1$- bis $C_{12}$-Alkyl, Aralkyl oder die Gruppe -CO-O-Y,
$R^3$ = H oder $C_1$- bis $C_{12}$-Alkyl,
Me = ein Titan-, Silicium- oder Zirconiumion,
X = H, $C_1$- bis $C_{12}$-Alkyl, Aryl oder Aralkyl, Alkoxyl, Aroxyl, Sulfonyl, Phosphat, Pyrophosphat,
Y = H, $C_1$- bis $C_{12}$-Alkyl oder Me, und n = 0 bis 4 ist, und bevorzugterweise

b) mindestens ein weiteres olefinisch ungesättigtes Comonomer mit mindestens zwei olefinisch ungesättigten Doppelbindungen pro Molekül, gegebenenfalls weitere Comonomere mit einer olefinisch ungesättigten Doppelbindung pro Molekül,

Insbesondere kann die Verbindung der Formel (1) erhalten werden durch Kondensation von Hydroxyethylmethacrylat mit Bernsteinsäureanhydrid und den entsprechenden Titan-Alkoholaten zu Metallkomplexen, die der allgemeinen Formel (1) entsprechen.

In einer Weiterbildung hiervon enthält das im Teilschritt ii) aufzubringende Beschichtungsmittel eine polymerisierbare Zusammensetzung enthaltend mindestens die Komponenten:

a) eine Verbindung entsprechend der allgemeinen Formel (2):

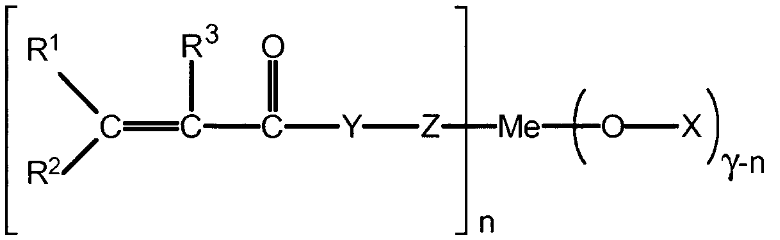

(2)

wobei $R^1$ und $R^2$ jeweils unabhängig voneinander ausgewählt sind aus Wasserstoff, $C_1$-$C_{12}$-Alkyl-, Arylalkyl-Gruppen oder aus der Gruppe -CO-O-W und W ein Wasserstoff-Atom, eine $C_1$-$C_{12}$ Alkyl-Gruppe oder Me ist;
wobei $R^3$ einem Wasserstoff-Atom oder einer $C_1$-$C_{12}$ Alkyl-Gruppe entspricht; wobei Me ein Metallatom mit der Oxidationsstufe $\gamma$ darstellt, welches ausgewählt ist aus der Gruppe bestehend aus Silizium, Titan, Zirkon, Mangan, Zink, Vanadium, Molybdän und Wolfram;
wobei X ein Wasserstoff-Atom, eine $C_1$-$C_{12}$ Alkyl-, eine Aryl- oder eine AralkylGruppe, eine Alkoxyl- oder Aroxyl-Gruppe darstellt oder 2(-O-X) Acetylacetonat entspricht;
wobei n = 1 bis $\gamma$-1 ist und $\gamma$ die Oxidationsstufe des Metalls Me bezeichnet; wobei Y eine Alkoxyl- oder Polyalkoxyl-Gruppe gemäß der folgenden allgemeinen Formel (3) darstellt:

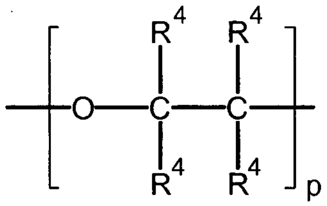

(3)

wobei die Gruppe Y über die Oxo-Funktion an den Teil der Verbindung (2) gebunden ist, der die olefinische Doppelbindung trägt;
wobei die Reste $R^4$ jeweils unabhängig voneinander ein Wasserstoff-Atom oder eine lineare Alkyl-Gruppe mit nicht mehr als 6 C-Atomen darstellen; und
wobei p mindestens 1 aber nicht größer als 10 ist und für den Fall, dass p gleich 1 ist, mindestens ein Rest $R^4$ nicht ein Wasserstoff-Atom darstellt;
wobei die Gruppe Z ausgewählt ist aus:
O, NH, S, O-C(=O)-$Z^b$-O, O-C(=O)-$Z^b$-NH, O-C(=O)-$Z^b$-S, O-C(=O)-$Z^b$-C(=O)-O, O-C(=O)-$Z^b$-P(=O)-O, O-C(=O)-$Z^b$-P(=O)$_2$-O, O-C(=O)-$Z^b$-O-P(=O)-O oder O-C(=O)-$Z^b$-O-P(=O)$_2$-O, wobei $Z^b$ eine organische Gruppe darstellt und die Carboxylgruppe -O-C(=O)- an die Gruppe Y gebunden ist; und

b) zusätzlich zur Komponente a) mindestens ein Comonomer oder Cooligomer das mindestens eine Carboxyl- oder eine Ester-Gruppe und mindestens eine olefinische Doppelbindung aufweist.

In einer bevorzugten Ausführungsform der polymerisierbaren Zusammensetzung ist die Gruppe $Z^b$ der Komponente a) ausgewählt aus:

- einer linearen oder verzweigten Alkyl-Gruppe, vorzugsweise aus einer linearen Alkyl-Gruppe -$(CH_2)_x$-, wobei x eine ganze Zahl von 1 bis 10 ist, und insbesondere eine ganze Zahl von 2 bis 4.

- einer linearen oder verzweigten Alkylen-Gruppen mit olefinischen Doppelbindungen, vorzugsweise mit einer Anzahl an C-Atomen in der Hauptkette, die nicht größer als 4 ist, insbesondere Vinylen.

- einer Gruppe von Typ $-(CH_2)_x-C_6H_4-(CH_2)_y-$, wobei x und y jeweils unabhängig voneinander ganze Zahlen von 0 bis 4, vorzugsweise von 0 bis 2, und besonders bevorzugt x und y gleich Null sind.

Entsprechend der allgemeinen Formel (2) ist die erfindungsgemäße Verwendung einer Komponente a) bevorzugt, bei der zumindest ein, vorzugsweise zwei und insbesondere sämtliche Reste $R_1$, $R_2$ und $R_3$ jeweils unabhängig voneinander ausgewählt sind aus H, $CH_3$, $C_2H_5$, $C_3H_7$ und $C_4H_9$.

Des Weiteren basiert die Gruppe Y der Komponente a) in einer bevorzugten Ausführungsform der polymerisierbaren Zusammensetzung auf Oxiran, 2-Methyl-Oxiran, 2,3-Dimethyloxiran und 2-Ethyl-Oxiran, wobei die Anzahl p der konstituierenden Einheiten von Y nicht größer als 6, vorzugsweise nicht größer als 4, aber mindestens gleich 1 und vorzugsweise mindestens 3 ist.

Unabhängig davon, ob das Beschichtungsmittel eine Metallverbindung der allgemeinen Formel (1) oder der allgemeinen Formel (2) enthält, wird als Komponente b) eine einzelne Verbindung oder - vorzugsweise - ein Gemisch unterschiedlicher Verbindungen vorhanden sein, die jede für sich der weiter oben gegebenen Definition der Komponente b) entspricht. Dabei ist das Monomer oder Oligomer der Gruppe b) vorzugsweise ausgewählt aus Acrylsäure, Methacrylsäure, Crotonsäure, Vinylessigsäure, Maleinsäure, Fumarsäure und aus Monomeren oder Oligomeren, die mindestens eine derartige Säuregruppe aufweisen, wobei die Carbonsäuregruppen vollständig oder teilweise verestert sein können.

Darüberhinaus kann das Monomer oder Oligomer der Gruppe b) insbesondere ausgewählt sein aus aromatischen oder aliphatischen Urethan-Acrylat- oder Urethan-Methacrylat-Oligomeren sowie Addukten oder Copolymeren von Acrylsäure oder Methacrylsäure oder Hydroxyalkyl-Derivaten hiervon mit ungesättigten Dicarbonsäuren oder mit Anhydriden mehrbasischer Carbonsäuren oder Derivaten hiervon. Beispiele der genannten ungesättigten Dicarbonsäuren sind Maleinsäure und Fumarsäure. Ein spezielles Anhydrid mehrbasischer Carbonsäuren ist Bernsteinsäure-Anhydrid.

Vorzugsweise ist zumindest ein Teil der Komponente b) ein olefinisch ungesättigtes Co-Monomer mit mindestens 2 olefinisch ungesättigten Doppelbindungen pro Molekül. Als Comonomere mit mindestens 2 olefinisch ungesättigten Doppelbindungen pro Molekül eignen sich eine Vielzahl von Comonomeren, z.B. Veresterungsprodukte von Alkanpolyolen, Polyesterpolyolen oder Polyetherpolyolen mit olefinisch ungesättigten Carbonsäuren wie z.B. Acrylsäure, Methacrylsäure, Itaconsäure, Crotonsäure, Maleinsäure, Maleinsäurehalbester, Fumarsäure, Fumarsäurehalbester oder reaktive carboxylgruppenhaltige Makromonomere oder deren Mischungen. Weiterhin eignen sich als Comonomere mit mindestens 2 reaktiven Doppelbindungen pro Molekül (Meth)acrylat-funktionelle Polysiloxane, (Meth)acrylat-funktionelle aliphatische, cycloaliphatische und/oder aromatische Polyepoxide sowie Polyurethan-Verbindungen mit reaktiven (Meth)acrylatgruppen. Typischerweise haben die vorgenannten Comonomeren mit mindestens 2 olefinisch ungesättigten Doppelbindungen pro Molekül Molekulargewichte im Bereich von 600 bis 50000, vorzugsweise zwischen 1000 und 10000.

Konkrete Beispiele für Alkan-Polyole sind 1,4-Butandiol, 1,6-Hexandiol, 1,8-Oktandiol sowie deren höhere Homologe, Glyzerin, Trimethylolpropan, Pentaerythrit sowie deren Alkoxylierungsprodukte.

Weiterhin sind als Polyole die flüssigen Polyester geeignet, die durch Kondensation von Di- bzw. Tricarbonsäuren, wie z.B. Adipinsäure, Sebacinsäure, Glutarsäure, Azelainsäure, Korksäure,3,3-Dimethyl-glutarsäure,Terephthalsäure, Isophthalsäure, Hexahydrophthalsäure oder Dimerfettsäure mit niedermolekularen Diolen bzw. Triolen wie z.B. Ethylenglykol, Propylenglykol, Diethylenglykol, Triethylenglykol, Dipropylenglykol, 1,4-Butandiol, 1,6-Hexandiol, 1,10-Decandiol, Dimerfettalkohol, Glyzerin oder Trimethylolpropan hergestellt werden können.

Eine weitere Gruppe der erfindungsgemäß einzusetzenden Polyol-Bausteine sind die Polyester auf der Basis von $\varepsilon$ -Caprolacton, auch "Polycaprolactone" genannt.

Es können aber auch Polyesterpolyole oleochemischer Herkunft verwendet werden. Derartige Polyesterpolyole können beispielsweise durch vollständige Ringöffnung von epoxidierten Triglyzeriden eines wenigstens teilweise olefinisch ungesättigte Fettsäure-enthaltenden Fettgemisches mit einem oder mehreren Alkoholen mit 1 bis 12 C-Atomen und anschließender partieller Umesterung der Triglyzerid-Derivate zu Alkylesterpolyolen mit 1 bis 12 C-Atomen im Alkylrest hergestellt werden. Weitere geeignete Polyole sind Polycarbonat-polyole und Dimerdiole sowie Rizinusöl und dessen Derivate. Auch die Hydroxy-funktionellen Polybutadiene, wie sie z.B. unter dem Handelsnamen "Poly-bd" erhältlich sind, können für die erfindungsgemäßen Zusammensetzungen als Polyole eingesetzt werden.

Für die Ausführung der vorliegende Erfindung eignen sich für das im Teilschritt ii) aufzubringende Beschichtungsmittel auch eine oder mehrere der radikalisch polymerisierbaren Polyurethan-Verbindungen (A), (B) und/oder (C) der allgemeinen Formel (4):

$$(H_2C{=}CR^1\text{-}C({=}O)\text{-}O\text{-}R^2\text{-}O\text{-}C({=}O)\text{-}NH\text{-})_n\ R^3 \qquad (4)$$

worin

$R^1$ = Wasserstoff oder eine Methylgruppe,

$R^2$ = eine lineare oder verzweigte Alkylgruppe mit 2 bis 6 C-Atomen oder Alkylenoxide mit 4 bis 21 C-Atomen und n = 1, 2 oder 3 ist,

(A) wobei $R^3$ für n = 1 ist:

- eine Arylgruppe mit 6 bis 18 Kohlenstoffatomen,
- eine geradkettige oder verzweigte Alkylgruppe mit 1 bis 18 C-Atomen oder
- eine Cycloalkylgruppe mit 3 bis 12 C-Atomen;

(B) $R^3$ für n = 2 ist:

$$[-Q-N\ H-C(=O)]_2(-O-R_4-O-C(=O)-NH-Q'-NH-C(=O))_m-O-R_4-O-]$$

wobei m = 0 bis 10 ist und $R^4$

a) ein Polycaprolactondiol-Rest
b) ein Polytetrahydrofurfuryldiol-Rest oder
c) ein Diol-Rest ist, der sich von einem Polyesterdiol ableitet, und ein Molekulargewicht von 1000 bis 20000 hat, oder (C) $R^3$ für n = 3 ist:

$$[-Q-NH-C(=O)-O-((CH_2)_5-C(=O))_p-]_3\ R^5,$$

wobei $R^5$ ein Triol-Rest eines 3 bis 6 C-Atomen enthaltenden, linearen oder verzweigten dreiwertigen Alkohols und p = 1 bis 10 ist und Q und Q' unabhängig voneinander 6 bis 18 C-Atome enthaltende aromatische, aliphatische oder cycloaliphatische Gruppen sind, die sich von Diisocyanaten oder Diisocyanatgemischen ableiten.

Beispiele für geeignete aromatische Polyisocyanate sind:

Alle Isomeren des Toluylendiisocyanats (TDI) entweder in isomerenreiner Form oder als Mischung mehrerer Isomerer, Naphthalin-1,5-Diisocyanat, Diphenylmethan-4,4'-Diisocyanat (MDI), Diphenylmethan-2,4'-Diisocyanat sowie Mischungen des 4,4'-Diphenylmethandiisocyanats mit dem 2,4'-Isomeren oder deren Mischungen mit höherfunktionellen Oligomeren (sogenanntes Roh-MDI), Xylylen-diisocyanat (XDI), 4,4'-Diphenyl-dimethylmethandiisocyanat, Di- und Tetraalkyl-diphenylmethandiisocyanat, 4,4'-Di-benzyldiisocyanat, 1,3-Phenylendiisocyanat, 1,4-Phenylendiisocyanat.

Beispiele für geeignete cycloaliphatische Polyisocyanate sind die Hydrierungsprodukte der vorgenannten aromatischen Diisocyanate wie z.B. das 4,4'-Dicydohexyl-methan-diisocyanat (H12MDI), 1-Isocyanatomethyl-3-Isocyanato-1,5,5-Trimethyl-cyclohexan (Isophoron-Diisocyanat, IPDI), Cyclohexan-1,4-Diisocyanat, hydriertes Xylylen-Diisocyanat (H6XDI), 1-Methyl-2,4-diisocyanato-cyclohexan, m- oder p-Tetra-methylxylendiisocyanat (m-TMXDI, p-TMXDI) und Dimerfettsäure-Diisocyanat.

Beispiele für aliphatische Polyisocyanate sind Tetramethoxybutan-1,4-diisocyanat, Butan-1,4-diisocyanat, Hexan-1,6-Diisocyanat (HDI), 1,6-Diisocyanato-2,2,4-Trimethylhexan, 1,6-Diisocyanato-2,4,4-Trimethylhexan, Butan-1,4-Diisocyanat sowie 1,12-Dodecandiisocyanat (C12DI).

Als Epoxidharz-Bausteine für die olefinisch ungesättigten Comonomeren mit mindestens zwei olefinisch ungesättigten Doppelbindungen pro Molekül eignen sich eine Vielzahl von Polyepoxiden, die mindestens 2 1,2-Epoxigruppen pro Molekül haben. Das Epoxid-Äquivalent dieser Polyepoxide kann zwischen 150 und 4000 variieren. Die Polyepoxide können grundsätzlich gesättigte, ungesättigte, cyclische oder acyclische, aliphatische, alicyclische, aromatische oder heterocyclische Polyepoxidverbindungen sein. Beispiele für geeignete Polyepoxide schließen die Polyglycidylether ein, die durch Reaktion von Epichlorhydrin oder Epibromhydrin mit einem Polyphenol in Gegenwart von Alkali hergestellt werden. Hierfür geeignete Polyphenole sind beispielsweise Resorcin, Brenzkatechin, Hydrochinon, Bisphenol A (Bis-(4-Hydroxy-phenyl)-2,2-propan)), Bisphenol F (Bis(4-hydroxyphenyl)methan), Bis(4-hydroxyphenyl)-1,1-isobutan, 4,4'-Dihydroxybenzophenon, Bis(4-hydroxyphenyl)-1,1-ethan, 1,5-Hydroxynaphthalin. Weitere prinzipiell geeignete Polyepoxide sind die Polyglycidylether von Polyalkoholen oder Diaminen. Diese Polyglycidylether leiten sich von Polyalkoholen wie Ethylenglykol, Diethylenglykol, Triethylenglykol, 1,2-Propylenglykol, 1,4-Butylenglykol, Triethylenglykol, 1,5-Pentandiol, 1,6-Hexandiol oder Trimethylolpropan ab. Weitere Polyepoxide sind Polyglycidylester von Polycarbonsäuren, beispielsweise Umsetzungen von Glycidol oder Epichlorhydrin mit aliphatischen oder aromatischen Polycarbonsäuren wie Oxalsäure, Bernsteinsäure, Glutarsäure, Terephthalsäure oder Dimerfettsäure. Weitere Epoxide leiten sich von den Epoxidierungsprodukten olefinisch ungesättigter cycloaliphatischer Verbindungen ab.

Konkrete Beispiele für erfindungsgemäß einzusetzende di-, tri- oder polyfunktionelle (Meth)acrylate sind die folgenden Verbindungen: 1,3-Butylenglykol-di(meth)acrylat, 1,4-Butandioldi(meth)acrylat, 1,6-Hexandioldi(meth)-acrylat, Bisphenol-A-Epoxid-Di(meth)acrylat, alkoxyliertes Bisphenol-A-Di(meth)acrylat, Polyalkylenglykoldi(meth)acrylat, Trialkylenglycoldiacrylat, Tetraalkylenglycol-di(meth)-acrylat, Neopentylglycoldi(meth)acrylat, alkoxyliertes Neopentylglykol-di(meth)acrylat, Trialkylolalkantri(meth)acrylat, alkoxyliertes Trialkylolalkan-tri(meth)acrylat, Glycerin-alkoxytri (meth)acrylat, Pentaerythritoltri(meth)acrylat, Tris-(2-hydroxyalkyl)isocyanurat-tri(meth)acrylat, säuregruppenhaltige Tri (meth)acrylatverbindungen, Trimethylol-propantri(meth)acrylat, Trisalkoxy-Trimethylolpropantri(meth)acrylat, Ditrimethylol-propan-tetra(meth)acrylat, Pentaerythritoltetra(meth)acrylat, alkoxyliertes Penta-erythritoltetra(meth)acrylat, Dipentaerythritolpenta(meth)acrylat, Dipentaerythritol-hexa(meth)acrylat, wobei "alkylen" ethylen, propylen oder butylen und "alkoxy" ethoxy, 1,2- oder 1,3-propoxy oder 1,4-butoxy bedeuten.

Zusätzlich können noch die folgenden (Meth)acrylat-Monomeren mitverwendet werden: Aminmodifizierte Polyetheracrylat-Oligomere, Carboxy-funktionalisierte multifunktionelle (Meth)acrylate, multifunktionelle Melaminacrylate, difunktionelle Siliconacrylate.

Als monofuntionelle Comonomere können die folgenden (Meth)acrylate mit verwendet werden:

Mono-Methacryloyloxyalkyl-succinat, n-/iso-Alkyl(meth)acrylat, Cyclohexyl(meth)-acrylat, 4-tert.-Butylcyclohexyl(meth)acrylat, Dihydrodicyclopentadienyl(meth)-acrylat, Tetrahydrofurfuryl(meth)acrylat, Isobornyl(meth)acrylat (IBOA), $\alpha$-Carboxyethyl-(meth)acrylat ($\alpha$-CEA); Mono(meth)acryloylalkylphthalate, - succinat, -maleinat; 2-(2-Ethoxyethoxy)-ethyl(meth)acrylat, 2-Phenoxyalkyl(meth)-acrylat, Alkandiolmono(meth)acrylat, Allyl(meth)acrylat, Hydroxyalkyl(meth)acrylat, 2,3-Epoxyalkyl(meth)acrylat, N,N-Dialkylaminoalkyl(meth)acrylat, N,N-Dialkyl-(meth) acrylamid, Monoalkoxytrialkylen-glycol(meth)acrylat, Monoalkoxyneopentyl-glycol-alkyloxylat-(meth)acrylat, Polyalkylenglycol(meth)acrylat, alkoxyliertes Nonylphenol(meth)acrylat, wobei die Alkylgruppen 1 bis 12 C-Atome aufweisen können und "alkoxy" ethoxy, 1,2- oder 1,3-propoxy oder 1,4-butoxy bedeuten.

Bei denjenigen Ausführungsformen der Erfindung, bei denen man im Teilschritt ii) ein strahlenhärtendes Beschichtungsmittel einsetzt, ist es weiterhin bevorzugt, dass dieses nicht mehr als 10 Gew.-%, vorzugsweise nicht mehr als 5 Gew.-% an Komponenten enthält, die beim Aushärten nicht in die entstehende Schicht eingebaut werden. Insbesondere enthält das Mittel keine nachweisbaren Mengen einer derartigen Komponente. In diesem Sinne ist das Mittel "frei von organischen Lösungsmitteln". Es kann jedoch zum Einstellen der Viskosität so genannte Reaktivverdünner enthalten, also Verbindungen mit einer Molmasse von unterhalb 300, die polymerisierbare Gruppen enthalten und die beim Aushärten in das entstehende Polymernetzwerk eingebunden werden.

In einer anderen Variante der vorliegenden Erfindung kann im Teilschritt ii) auch ein wasserbasiertes Beschichtungsmittel enthaltend wasserlösliche und/oder wasserdispergierte organische Polymere eingesetzt werden.
Geeignet hierfür ist beispielsweise ein organisches Bindemittelsystem auf Basis von wasserdispergierten Epoxidharzen mit einem Zusatz an Polyaminen als Härter. Derartige wässrige Bindemittelsystem werden thermisch bei Temperaturen von vorzugsweise mehr als 100 °C ausgehärtet.
Weitere wässrige Bindemittelsysteme basieren auf Dispersionen von Polystyrolacrylaten, Polycarbonaten und Polyurethanen, die beim Verdunsten des Lösemittels Wasser verfilmen. Der Wasseranteil in solchen wasserbasierten Beschichtungsmitteln überschreitet vorzugsweise nicht 75 Gew-%.

Weiterhin ist es bevorzugt, dass die im Teilschritt ii) aufgebrachte Schicht zusätzlich elektrisch nicht leitende Korrosionsinhibitoren und/oder Korrosionsschutzpigmente enthält. Dies gilt sowohl für Ausführungsformen, bei denen thermisch härtbare Beschichtungsmittel eingesetzt werden, als auch für solche, die strahlenhärtbare Beschichtungsmittel vorsehen. Hierbei können Korrosionsinhibitoren oder Korrosionsschutzpigmente eingesetzt werden, die im Stand der Technik für diesen Zweck bekannt sind. Beispielsweise genannt seien: Magnesiumoxidpigmente, insbesondere in nanoskaliger Form, feinteiliges und sehr feinteiliges Bariumsulfat oder Korrosionsschutzpigmente basierend auf Calciumsilicat. Der bevorzugte Gewichtsanteil der Korrosionsschutzpigmente an der Gesamtmasse des Mittels hängt von der Dichte der eingesetzten Korrosionsschutzpigmente ab. Vorzugsweise enthält das erfindungsgemäße Mittel, bezogen auf die Gesamtmasse des Mittels, 5 bis 25 Gew.-%, insbesondere 7 bis 20 Gew.-% Korrosionsschutzpigment.

Die mechanischen und chemischen Eigenschaften der nach dem Aushärten des im Teischritt ii) aufgebrachten Beschichtungsmittels erhaltenen Beschichtung können weiterhin dadurch verbessert werden, dass diese zusätzlich Füllstoffe enthält. Beispielsweise können diese ausgewählt sein aus Kieselsäuren oder Siliciumoxiden (gegebenenfalls hydrophobiert), Aluminiumoxiden (einschließlich basischen Aluminiumoxid), Titandioxid und Bariumsulfat. Hinsichtlich deren bevorzugter Mengen gilt, dass das Mittel 0,1 bis 25 Gew.-%, vorzugsweise 0,4 bis 5 Gew.-% Füllstoff ausgewählt aus Kieselsäuren bzw. Siliciumoxiden, Aluminiumoxiden, Titandioxid, Zinkoxid und Bariumsulfat enthält.

Werden Gleitmittel oder Umformhilfen zusätzlich mit eingesetzt, so gilt, dass das Mittel bezogen, auf seine Gesamtmasse, Gleitmittel oder Umformhilfen, vorzugsweise ausgewählt aus Wachsen und Teflon, vorzugsweise in einer Menge von 0,5 bis 20, insbesondere in einer Menge von 1 bis 10 Gew.-% enthält.

Weiterhin kann das Mittel Haftvermittler enthalten, insbesondere Silane. Dabei sind Silane bevorzugt, die am

Si einerseits hydrolysierbare Gruppen wie beispielsweise Alkoxygruppen (z.B. Methoxy-, Ethoxy-, Propoxy-Gruppen) und andererseits nicht hydrolysierbare Gruppen enthalten, die gegenüber Lack-Präpolymeren reaktive Gruppen wie beispielsweise C = C - Doppelbindungen oder Oxiranringe aufweisen.

Dabei führt man vorzugsweise zumindest die Schritte (i) und (ii) als Bandbehandlungsverfahren durch, wobei man im Schritt (ii) das flüssige Behandlungsmittel in einer solchen Menge aufbringt, dass man nach dem Aushärten die gewünschte Schichtdicke im Bereich von 1 bis 3 $\mu$m erhält. Vorzugsweise wird also das Mittel im so genannten Coil-Coating-Verfahren aufgebracht. Hierbei werden laufende Metallbänder kontinuierlich beschichtet. Das Beschichtungsmittel kann dabei nach unterschiedlichen Verfahren aufgetragen werden, die im Stand der Technik geläufig sind. Beispielsweise können Auftragswalzen verwendet werden, mit denen sich direkt die erwünschte Nassfilm-Dicke einstellen lässt. Alternativ hierzu kann man das Metallband in das Beschichtungsmittel eintauchen oder es mit dem Beschichtungsmittel besprühen, wonach man mit Hilfe von Abquetschwalzen die erwünschte Nassfilmdicke einstellt.

Wie im Automobilbau üblich, kann das metallische Material ausgewählt sein aus Aluminium oder einer Aluminiumlegierung, Zink oder einer Zinklegierung, Edelstahl, Stahl oder mit Zink, Aluminium oder Legierungen von Zink oder Aluminium beschichtetem Stahl.

Blechteile, die nach dem erfindungsgemäßen Verfahren beschichtet und gefügt wurde, können beispielsweise für die Herstellung von "Weißer Ware", Automobilkarosserien, Gehäuse elektronischer Bauteile, für das Baugewerbe oder den Transportsektor verwendet werden. Dabei ist es üblich, nach Fertigung der entsprechenden Gegenstände (Teilschritt iv) eine oder mehrere weitere Lackschichten aufzubringen. Dies geschieht im Fahrzeugbau üblicherweise durch kathodische Elektrotauchlackierung, was aufgrund der elektrischen Leitfähigkeit der Beschichtung möglich ist. Hieran schließen sich die Automobil-typischen weiteren Lackierschritte an. Für einfachere Korrosionsschutzanforderungen wie beispielsweise in der Haushaltsgeräteindustrie kann auf den erfindungsgemäß beschichteten und gefügten Blechteil ein Pulverlack als Decklack aufgetragen werden.

Beispiele

Nachfolgend wird die Erfindung durch einige Ausführungsbeispiele näher erläutert.

a) Vorbehandlung
Auf ein mit alkalischen Reinigern (z.B. Ridoline® C 72, Ridoline® 1340;Tauch-, Spritzreinigungsprodukte der Anmelderin) gereinigtes, verzinktes Metallblech wird eine kommerzielle Vorbehandlungslösung auf Basis Phosphorsäure, Manganphosphat, $H_2TiF_6$ und Aminomethyl-substituiertem Polyvinylphenol (Granodine$^R$ 1455 der Anmelderin) aufgetragen und mit einer Lackschleuder oder einem Chemcoater auf der Metalloberfläche verteilt. Es erfolgt eine Trocknung bei 80 °C.

b) Herstellvorschrift und Applikation der Korrosionsschutz-Zusammensetzung: Die organischen Bindemittel gemäß nachstehenden Zusammensetzungs-Tabellen werden bei Raumtemperatur in einem Dissolvergefäß vorgelegt und das Korrosionsschutzpigment(gemisch) fein dispergiert, was 10 bis 60 Minuten dauern kann. Anschließend werden gegebenenfalls Lösungsmittel oder Reaktivverdünner und weitere Additive eingemischt.

Die Korrosionsschutz-Zusammensetzung wird mit einem Rakel oder einem Roll-Coater auf die vorbehandelten Bleche appliziert und durch Erwärmen im Trockenschrank auf die in den Tabellen angegebene Substrattemperatur gehärtet.

Testverfahren:

Korrosionsschutztest [nach DIN 50021]:

Drei Kanten und die Rückseite des beschichteten Prüfblechs werden mit Klebeband abgeklebt. An einer Längsseite erzeugt man eine frische Schnittkante.
Ferner wird das Blech mit einem Ritz versehen. Anschließend wird das Prüfblech in das Salzsprühnebeltestgerät verbracht. Beurteilt wird nach bestimmten Zeitintervallen der Rostgrad am Ritz, Kante und auf der Blechoberfläche. In den Tabellen ist die Stundenzahl angegeben, nach der Rotrost auf den Prüfblechen zu sehen ist.

MEK-Beständigkeit:

Ein 1 kg Gewichtsblock wird mit Methylethylketon (MEK) getränkter Watte umwickelt und über die zu testende, mit der Korrosionsschutz-Zusammensetzung beschichtete Oberfläche geführt. Die Anzahl an Doppelhüben, die benötigt werden um die Beschichtung bis zum Sichtbarwerden des metallischen Untergrundes zu entfernen, wird gezählt und

ist ein Maß für die Lösemittelbeständigkeit.

T-Bend-Test: gem. ECCA-Prüfverfahren T7 [1996]: "Resistance to cracking on bending"

Das beschichtete Blech wird mit einer Abkantpresse um 180° gebogen. Ein Klebeband (Tesafilm 4104) wird auf die Kante geklebt und ruckartig abgerissen. Die Rissbildung an der umgeformten Kante wird nach DIN 53230 beurteilt.

Reverse Impact-Test: gem. ECCA-Prüfverfahren T5 [1985]: "Widerstand gegen Rissbildung bei schneller Umformung".

Mit einem Kugelschlagprüfgerät (Gewicht: 2 kg; Höhe: 1 m) wird das einseitig beschichteten Bleche umgeformt. Ein Klebeband (Tesafilm 4104) wird auf die entstandene Wölbung geklebt und ruckartig abgerissen. Optisch wird die Menge an mit dem Klebeband abgelöster Beschichtung in einer Bewertungsskala von 1 bis 5 beurteilt. Dabei bedeuten: 1: keine abgelöste Beschichtung; 5: Beschichtung weitgehend abgelöst.

Alkalibeständigkeit:

Entsprechend dem Reverse Impact-Test wird das einseitig beschichtete Blech umgeformt. Der verformte Teil wird für 10 Minuten in eine 70 - 80 °C heiße alkalische Reinigungslösung getaucht (Ridoline® C72, 1 %-ig, pH ca. 13). Nach Abspülen und Trocknen des verformten Teils wird ein Klebeband (Tesafilm 4104) auf die entstandene Wölbung geklebt und ruckartig abgerissen. Optisch wird die Menge an mit dem Klebeband abgelöster Beschichtung in einer Bewertungsskala von 1 bis 5 beurteilt. Dabei bedeuten: 1: keine abgelöste Beschichtung; 5: Beschichtung weitgehend abgelöst.

Einzelheiten zur Zusammensetzung erfindungsgemäßer Korrosionsschutzmittel und Prüfergebnisse können den nachstehenden Tabellen entnommen werden. Dabei gelten folgende Akkürzungen:

PMT: "Peak Metal Temperature": Höchste erreichte Substrattemperatur beim Aushärten der Beschichtung,
MEK: MEK-Beständigkeit gemäß obiger Beschreibung,

Schweißtests:

Im Folgenden wurde die Standmenge eines EG-Substrates (beidseitig verzinkt), einseitig beschichtet mit einem Beschichtungsmittel gemäß nachstehendem Beispiel 7 mit einer Schichtdicke von 1,7-2,1 Mikrometer bestimmt, die bei 160 °C (Substrattemperatur) gehärtet wurde. Dasselbe Ergebnis wurde nach demselben Verfahren mit dem Beschichtungsmittel gemäß Beispiel 1 erhalten, das mittels UV-Strahlung gehärtet wurde.

Schweißgerät: Hersteller DALEX Schweißtechnik, Maschinentyp PMS 11-4, Nr. ZCB/N-21926, DALEX-Punktschweißmaschine

Substrat: 0,8 mm-Bleche, EG beidseitig verzinkt, einseitig organisch beschichtet, Vorbehandlung vor der Beschichtung wie oben angegeben. Bei der Schweißung zweier Bleche weist die organische Beschichtung nach außen, die nicht beschichteten Seiten liegen innen, Schichtdicke der org. Beschichtung 1,7-2,1 Mikrometer (aufgebracht mit Roll-Coater im Labormaßstab)

Elektroden: Kupfer/ Zr-Legierung basierte Elektroden, Elektrodenform: MB-Standardkappe ISO 5821 - F16X20 abgeplattet, Durchmesser 5,5 mm, Hersteller DALEX

Durchführung der Schweißung: Schweißstromeinstellung 8,2 kAmpere,
Elektrodenanpresskraft 2,5 kNewton, Schweißgeschwindigkeit 30 Punkte/ Minute, Vorhaltezeit (Zeit vom Aufsetzen der Elektroden bis zum Erreichen des Anpressdrucks von 2.5kN; erst dann setzt der Strom ein) 20 Perioden, Nachhaltezeit (Zeit vom Aussetzen des Stroms bis zum Abfall des Anpressdruckes auf 0) 10 Perioden, Schweißzeit 8 Perioden

Ergebnis: Nach 600 Schweißpunkten war die Ausknüpfung in Ordnung. Nach 700 Schweißpunkten war die Ausknüpfung nicht in Ordnung, d.h. sog. Haftschweißung.

Ein im Teilschritt ii) aufzubringendes strahlungshärtbares Beschichtungsmittel kann beispielsweise eine Zusammensetzung gemäß Tabelle 1 haben:

Beispiel 1

| Komponente | Anteil / Gew.-% |
|---|---|
| Acrylharz (50-75%) + Acryliertes Monomer (25-50%) Dreifach acrylierter Säurester | 80<br>5 |
| 2-Hydroxy-2-Methyl-1-Phenyl-Propan-1-on (30%) Oligo-[2-Hydroxy-2-Methyl-1-[4-(1-Methylvinyl)-Phenyl]-Propanon] (70%) | 5 |

(fortgesetzt)

| Komponente | Anteil / Gew.-% |
|---|---|
| Kalzium-Silikat Pigment | 10 |

| Eigenschaften/ Beispiel Nr. | 1 |
|---|---|
| Topfzeit | ca. 6 Monate |
| t-bend | 1 |
| reverse impact | 0-1 |
| MEK / Doppelhübe | 100 |
| Alkalibeständigkeit | 1-2 |
| Korrosionsschutz | 400 h bis Rotrost |
| Standmenge | 600 Punkte |

Weitere Beispiele: Thermisch härtbare Beschichtungsmittel, Mengenangaben in Gewichtsteilen:

| Komponente Nr. | Beispiel 2 | Beispiel 3 | Beispiel 4 | Beispiel 5 | Beispiel 6 | Beispiel 7 |
|---|---|---|---|---|---|---|
| 1 | 2,75 | 4,67 | 4,58 | 4,49 | 3,81 | 4,14 |
| 2 | 3,01 | 5,11 | 5,01 | 4,91 | 4,14 | 4,54 |
| 3 | 3,60 | 3,06 | 3,00 | 2,94 | 2,46 | 2,69 |
| 4 | 7,74 | 6,57 | 6,44 | 6,32 | 5,28 | 5,77 |
| 5 | 21,06 | 17,89 | 17,54 | 17,20 | 14,38 | 15,66 |
| 6 | 0,33 | 0,29 | 0,28 | 0,28 | 0,27 | 0,28 |
| 7 | 22,00 | 11,30 | 21,57 | 21,15 | 26,74 | 24,69 |
| 8 | | 10,70 | | | 8,60 | 6,49 |
| 9 | 15,00 | 15,00 | 14,71 | 14,42 | 11,99 | 14,69 |
| 10 | 0,70 | 0,70 | 0,69 | 0,67 | 0,57 | 0,60 |
| 11 | | | | 0,86 | | |
| 12 | | | 0,98 | | 0,90 | |
| Lösungsmittel aus Rohstoffen | 16,81 | 17,71 | 18,34 | 20,03 | 15,20 | 14,30 |
| Eigenschaften/ Beispiel Nr. | 2 | 3 | 4 | 5 | 6 | 7 |
| PMT /°C | 160 | 160 | 160 | 160 | 160 | 160 |
| Topfzeit | ca. 48h | ca. 36h | ca. 48h | ca. 48h | ca. 48h | ca. 48 h |
| t-bend | 1 | 1-2 | 2-3 | 1 | 1-2 | 1 |
| reverse impact | 1-2 | 1-2 | 3 | 1 | 2 | 1 |
| MEK / Doppelhübe | 10 | 11 | 8 | 9 | 9 | 5 |
| Alkalibeständigkeit | 1-2 | 1-2 | 2-3 | 2 | 2 | 1-2 |
| Korrosionsschutz / Stunden bis Rotrost | 1000 | 1000 | 1000++ | 1000 | 1000 | 1000 |

Dabei bedeuten:

Komponente Nr.

| | |
|---|---|
| 1 | Modifiziertes Epoxidharz, (50%-ige Dispersion in Lösungsmittelgemisch): Hydroxylgruppen-haltiger Polyether ohne Epoxi-Gruppen, Reaktionsprodukt aus Bisphenol A und Epichlorhydrin, mittlere Molmasse 40.000, OH-Zahl ca. 190. |
| 2 | Blockiertes, aliphatisches Polyisocyanat auf HDI-Basis, 70 % in Lösungsmittel |
| 3 | Aliphatisches Polyisocyanat (HDI-Trimer), (90 % in Lösungsmittelgemisch): NCO-Gehalt ca. 19,3 bis 19,9 %, Äquivalentgewicht ca. 214 g/mol |

(fortgesetzt)

| | |
|---|---|
| 4 | Aliphatisches Polyisocyanat (HDI-Trimer), (90 % in Lösungsmittel): NCO-Gehalt ca. 17,3 bis 18,3 %, Äquivalentgewicht ca. 236 g/mol |
| 5 | Hydroxylgruppen-haltiges Polyacrylat (65 % in Lösungsmittelgemisch): Säurezahl 4-9 mg KOH/g, OH-Gehalt 2,6-3,4 % |
| 6 | Freie Säure eines komplexen Alkylphosphatesters, 66 % in Lösungsmittel |
| 7 | Diacetonalkohol |
| 8 | Mischung aus 55-65% Glutarsäuredimethylester, 15-25% Bernsteinsäuredimethylester und 10-25% Adipinsäuredimethylester |
| 9 | Korrosionsschutzpigment auf Calciumsilicat-Basis |
| 10 | Kieselsäure |
| 11 | Tannin-haltiges Netzmittel, 22% in Lösungsmittel |
| 12 | Barium-dinonylnaphthalinsulphonat, 50 % in Lösungsmittel |

## Patentansprüche

1. Verfahren zur Korrosionsschutzbehandlung und zum Fügen von Metallteilen, **gekennzeichnet durch** die in der angegebenen Reihenfolge ausgeführten Schritte:

   i) gegebenenfalls korrosionsschützende Erstbehandlung eines Metallblechs oder Metallbands,
   ii) Aufbringen eines Beschichtungsmittels auf Basis organischer Polymere auf das Metallblech oder das Metallband, wobei das Beschichtungsmittel keine elektrisch leitfähigen Pigmente enthält, und Aushärten dieses Beschichtungsmittels, wobei das Beschichtungsmittel in einer solchen Nassfilmdicke aufgebracht wird, dass nach dem Aushärten eine Schicht mit einer Dicke im Bereich von 1 bis 3 $\mu$m entsteht,
   iii)Zerschneiden des Metallblechs oder Metallbands in Blechteile, die erforderlichenfalls umgeformt werden können,
   iv)Fügen der Blechteile miteinander oder mit anderen Blechteilen **durch** Elektroschweißen unter Verwendung einer Schweißelektrode, wobei mindestens 10 % der Standmenge des unbeschichteten Blechteils erreicht werden,

   wobei das unbeschichtete Metallblech oder Metallband vor einer gegebenenfalls vorzunehmenden korrosionsschützenden Vorbehandlung gemäß Schritt i) eine mittlere Rautiefe von zumindest 0,5 $\mu$m, aber nicht mehr als 10 $\mu$m aufweist und wobei das Beschichtungsmittel im Schritt ii) in einer solchen Nassfilmdicke gemäß dem Quotienten aus aufgebrachten Volumen und benetzter Oberfläche aufgebracht wird, dass diese zumindest der halben mittleren Rautiefe des Metallblechs oder Metallbands unmittelbar vor einem Verfahrensschritt i) entspricht.

2. Verfahren gemäß Anspruch 1, **dadurch gekennzeichnet, dass** das unbeschichtete Metallblech oder Metallband eine mittlere Rillenbreite von nicht mehr als 50 $\mu$m, vorzugsweise nicht mehr als 20 $\mu$m aufweist.

3. Verfahren gemäß einem oder beiden der vorherigen Ansprüche, **dadurch gekennzeichnet, dass** im Schritt ii) das Beschichtungsmittel in einer solchen Nassfilmdicke gemäß dem Quotienten aus aufgebrachten Volumen und benetzter Oberfläche aufgebracht wird, dass diese zumindest der halben mittleren Rautiefe des Metallblechs oder Metallbands unmittelbar vor einem Verfahrensschritt i) multipliziert mit einem Korrekturfaktor $\lambda$ entspricht, wobei der Korrekturfaktor $\lambda$ sich folgendermaßen berechnet:

$$\lambda = \frac{100}{FK\%} \frac{\delta_{TF}}{\delta_B}$$

   mit FK%: Festkörperanteil des Beschichtungsmittels in %
   $\delta_{TF}$: Dichte des nicht ausgehärteten Trockenfilms nach DIN 53219 gemessen auf Prüfkörpern mit einer mittleren Rautiefe von weniger als 0,5 $\mu$m;

$\delta_B$: Dichte des Beschichtungsmittels.

4. Verfahren gemäß einem oder mehreren der vorherigen Ansprüche, **dadurch gekennzeichnet, dass** im Schritt ii) das Beschichtungsmittel in einer solchen Nassfilmdicke aufgebracht wird, dass die Differenz aus Dicke der ausgehärteten Schicht und dem halben Wert der mittleren Rautiefe des Metallblechs oder Metallbands unmittelbar vor einem Verfahrensschritt i) kleiner als 2 $\mu$m, vorzugsweise kleiner als 1 $\mu$m ist.

5. Verfahren gemäß einem oder mehreren der vorherigen Ansprüche, **dadurch gekennzeichnet, dass** im Schritt ii) das Beschichtungsmittel eine Viskosität von nicht mehr als 500 mPas, vorzugsweise von nicht mehr als 300 mPas aufweist.

6. Verfahren nach einem oder mehreren der vorherigen Ansprüche, **dadurch gekennzeichnet, dass** man im Teilschritt ii) zum Aufbringen der Beschichtung ein Mittel zum Beschichten von Metalloberflächen einsetzt, das in einem organischen Lösungsmittel oder Lösungsmittelgemisch gelöste oder dispergierte organische Harzkomponenten enthält, wobei das Mittel frei ist von elektrisch leitfähigen Pigmenten und mindestens folgende organische Harzkomponenten enthält, die bei einer Substrat-Temperatur im Bereich von 120 bis 260 °C thermisch härtbar sind:

   a) als Hydroxylguppen-haltiger Polyether vorliegendes Epoxidharz auf Basis eines Bisphenol-Epichlorhydrin-Polykondensationsproduktes,
   b) blockiertes aliphatisches Polyisocyanat,
   c) nicht blockiertes aliphatisches Polyisocyanat,
   d) mindestens eine Reaktionskomponente ausgewählt aus Hydroxylgruppen-haltigen Polyestern und Hydroxylgruppen-haltigen Poly(meth)acrylaten.

7. Verfahren nach Anspruch 6, **dadurch gekennzeichnet, dass** das Mittel zum Beschichten von Metalloberflächen die Komponenten a) bis d) in folgenden Mengenbereichen in Gew.-% bezogen auf das gesamte Mittel enthält:

   a) 2 bis 8 Gew.-%
   b) 2 bis 10 Gew.-%
   c) 1,5 bis 5 Gew.-%
   d) 10 bis 25 Gew.-%

8. Verfahren nach einem oder mehreren der Ansprüche 1 bis 5, **dadurch gekennzeichnet, dass** man im Teilschritt ii) zum Aufbringen der Beschichtung ein Mittel zum Beschichten von Metalloberflächen auf Basis organischer Polymere einsetzt, die unter Einwirkung energiereicher Strahlung härtbar sind, wobei das Mittel frei ist von elektrisch leitfähigen Pigmenten, und die Beschichtung unter Einwirkung energiereicher Strahlung aushärtet, vorzugsweise unter Einwirkung von Elektronenstrahlung und UV-Strahlung.

9. Verfahren nach Anspruch 8, **dadurch gekennzeichnet, dass** das Mittel zum Beschichten von Metalloberflächen mindestens die folgenden Komponenten enthält:

   a) mindestens ein Salz oder einen Komplex einer olefinisch ungesättigten polymerisierbaren Carbonsäure oder eines Moleküls, das aus einer olefinisch ungesättigten polymerisierbaren Carbonsäure durch eine Reaktion an der Carboxylgruppe erhältlich ist, mit mindestens einem der Metalle Silizium, Titan, Zirkon, Mangan, Zink, Vanadium, Molybdän und Wolfram,
   b) einen Initiator oder ein Initiatorgemisch zur freien radikalischen und/oder kationischen Polymerisation,
   c) mindestens eine weitere polymerisierbare olefinisch ungesättigte Verbindung mit mindestens einer Carboxyl- oder einer Ester-Gruppe enthält.

10. Verfahren nach Anspruch 9, **dadurch gekennzeichnet, dass** die Komponenten a) und c) in folgenden Gewichtsanteilen relativ zur Gesamtzusammensetzung enthalten sind:

    1 bis 80 Gew.-%, vorzugsweise 1 bis 40 Gew.-% der Komponente a) 20 bis 95 Gew.-%, vorzugsweise 40 bis 90 Gew.-% der Komponente c).

11. Verfahren gemäß einem oder mehreren der Ansprüche 1 bis 10, **dadurch gekennzeichnet, dass** das Metallblech oder Metallband ausgewählt ist aus Aluminium oder einer Aluminiumlegierung, Zink oder einer Zinklegierung, Edelstahl, Stahl oder mit Zink, Aluminium oder Legierungen von Zink oder Aluminium beschichtetem Stahl.

## Claims

1. A method for corrosion protection treatment and joining of metal parts, **characterised by** the steps, carried out in the sequence indicated, of:

   i) if applicable, initial corrosion protection treatment of a metal panel or metal strip,
   ii) applying a coating agent based on organic polymers onto the metal panel or metal strip, the coating agent containing no electrically conductive pigments, and curing said coating agent, the coating agent being applied at a wet-film thickness such that a layer having a thickness in the range from 1 to 3 μm is produced after curing,
   iii) cutting the metal panel or metal strip into sheet-metal parts that can be reshaped if necessary,
   iv) joining the sheet-metal parts to one another or to other sheet-metal parts by electric welding using a welding electrode, at least 10% of the tool life quantity of the uncoated sheet-metal part being achieved,
   where the uncoated metal panel or metal strip has, before a corrosion protection pretreatment optionally to be performed in accordance with step i), a surface roughness of at least 0.5 μm but not more than 10 μm, and where the coating agent in step ii) is applied at a wet film thickness, in accordance with the quotient of the applied volume and wetted surface, such that it corresponds at least to half the average surface roughness of the metal panel or metal strip immediately before a method step i).

2. The method according to Claim 1, **characterised in that** the uncoated metal panel or metal strip has an average groove width of no more than 50 μm, by preference no more than 20 μm.

3. The method according to one or both of the preceding claims, **characterised in that** in step ii) the coating agent is applied at a wet film thickness, in accordance with the quotient of the applied volume and wetted surface, such that it corresponds at least to half the average surface roughness of the metal panel or metal strip immediately before a method step i) multiplied by a correction factor λ, where the correction factor λ is calculated as follows:

$$\lambda = \frac{100}{FK\%}\frac{\delta_{TF}}{\delta_B}$$

   where

   FK% = solids content of the coating agent, in %;
   $\delta_{TF}$ = density of the uncured dry film per DIN 53219, measured on specimens having an average surface roughness of less than 0.5 μm;
   $\delta_B$ = density of the coating agent.

4. The method according to one or more of the preceding claims, **characterised in that** in step ii) the coating agent is applied at a wet film thickness such that the difference between the thickness of the cured layer and half the value of the average surface roughness of the metal panel or metal strip immediately before a method step i) is less than 2 μm, by preference less than 1 μm.

5. The method according to one or more of the preceding claims, **characterised in that** in step ii) the coating agent has a viscosity of no more than 500 mPas, by preference no more than 300 mPas.

6. The method according to one or more of the preceding claims, **characterised in that** in sub-step ii), in order to apply the coating, an agent for coating metal surfaces is used which contains organic resin components dissolved or dispersed in an organic solvent or solvent mixture, the agent being free of electrically conductive pigments and containing at least the following organic resin components that are thermally curable at a substrate temperature in the range from 120 to 260°C:

   a) an epoxy resin, present as a hydroxyl-group-containing polyether, based on a bisphenol-epichlorohydrin polycondensation product,
   b) a blocked aliphatic polyisocyanate,
   c) an unblocked aliphatic polyisocyanate,
   d) at least one reaction component selected from hydroxyl-group-containing polyesters and hydroxyl-group-containing poly(meth)acrylates.

7. The method according to Claim 6, **characterised in that** the agent for coating metal surfaces contains the components a) to d) in the following quantitative ranges, in wt% based on the total agent:

a) 2 to 8 wt%
b) 2 to 10 wt%
c) 1.5 to 5 wt%
d) 10 to 25 wt%.

8. The method according to one or more of Claims 1 to 5, **characterised in that** in sub-step ii) an agent for coating metal surfaces based on organic polymers is used for application of the coating, said polymers being curable under the action of high-energy radiation, the agent being free of electrically conductive pigments, and the coating curing under the action of high-energy radiation, by preference under the action of electron radiation and UV radiation.

9. The method according to Claim 8, **characterised in that** the agent for coating metal surfaces contains at least the following components:

a) at least one salt or one complex of an olefinically unsaturated polymerisable carboxylic acid, or of a molecule that is obtainable from an olefinically unsaturated polymerisable carboxylic acid by a reaction at the carboxyl group, with at least one of the metals silicon, titanium, zirconium, manganese, zinc, vanadium, molybdenum, and tungsten,
b) an initiator or an initiator mixture for free-radical and/or cationic polymerization,
c) at least one further polymerisable olefinically unsaturated compound having at least one carboxyl group or one ester group.

10. The method according to Claim 9, **characterised in that** the components a) and c) are contained in the following weight proportions relative to the total composition:

1 to 80 wt%, by preference 1 to 40 wt%, of component a), 20 to 95 wt%, by preference 40 to 90 wt%, of component c).

11. The method according to one or more of Claims 1 to 10, **characterised in that** the metal panel or metal strip is selected from aluminium or an aluminium alloy; zinc or a zinc alloy; stainless steel; steel; or steel coated with zinc, aluminium, or alloys of zinc or aluminium.

**Revendications**

1. Procédé pour le traitement de protection contre la corrosion et pour l'assemblage de pièces métalliques, **caractérisé par** les étapes mises en oeuvre dans l'ordre indiqué :

i) de manière facultative, un premier traitement d'une tôle métallique ou d'un ruban métallique procurant une protection contre la corrosion ;
ii) l'application d'un agent d'enduction à base de polymères organiques sur la tôle métallique ou sur le ruban métallique, l'agent d'enduction ne contenant pas de pigments électroconducteurs, et le durcissement de cet agent d'enduction, l'agent d'enduction étant appliqué avec une épaisseur du film à l'état humide telle que l'on obtient après le durcissement une couche possédant une épaisseur dans la plage de 1 à 3 $\mu$m ;
iii) la découpe de la tôle métallique ou du ruban métallique pour obtenir des pièces en tôle que l'on peut déformer en cas de nécessité ;
iv) l'assemblage des pièces en tôle les unes avec les autres ou avec d'autres pièces en tôle par soudure électrique en utilisant une électrode de soudure, pour atteindre au moins 10 % de la durée de vie utile de la pièce en tôle non enduite ;
la tôle métallique ou le ruban métallique non enduit présentant, avant un prétraitement de protection contre la corrosion à prévoir le cas échéant conformément à l'étape i), une rugosité moyenne d'au moins 0,5 $\mu$m, mais qui n'est pas supérieure à 10 $\mu$m, et l'agent d'enduction étant appliqué à l'étape ii) avec une épaisseur du film à l'état humide, sur base du quotient du volume appliqué et de la surface mouillée, telle qu'elle correspond au moins à la moitié de la rugosité moyenne de la tôle métallique ou du ruban métallique, directement avant l'étape opératoire i).

**2.** Procédé selon la revendication 1, **caractérisé en ce que** la tôle métallique ou le ruban métallique non enduit présente une largeur de rainure qui n'est pas supérieure à 50 $\mu$m, de préférence qui n'est pas supérieure à 20 $\mu$m.

**3.** Procédé selon une des revendications précédentes ou les deux, **caractérisé en ce que**, à l'étape ii), on applique l'agent d'enduction avec une épaisseur du film à l'état humide, sur base du quotient du volume appliqué et de la surface mouillée, telle qu'elle correspond au moins à la moitié de la rugosité moyenne de la tôle métallique ou du ruban métallique, directement avant l'étape opératoire i), multiplié par un facteur de correction $\lambda$, le facteur de correction $\lambda$ étant calculé en se référant à l'équation suivante :

$$\lambda = \frac{100}{FK\%} \frac{\delta_{TF}}{\delta_B}$$

dans laquelle :

FK% représente la fraction de corps solide de l'agent d'enduction en % ;
$\delta_{TF}$ représente la densité du film à sec non durci selon la norme DIN 53219, mesurée sur des échantillons dont la rugosité moyenne est inférieure à 0,5 $\mu$m ;
$\delta_B$ représente la densité de l'agent d'enduction.

**4.** Procédé selon une ou plusieurs des revendications précédentes, **caractérisé en ce que**, à l'étape ii), on applique l'agent d'enduction avec une épaisseur du film à l'état humide, telle que la différence entre l'épaisseur de la couche durcie et la moitié de la valeur de rugosité moyenne de la tôle métallique ou du ruban métallique directement avant l'étape opératoire i) est inférieure à 2 $\mu$m, de préférence inférieure à 1 $\mu$m.

**5.** Procédé selon une ou plusieurs des revendications précédentes, **caractérisé en ce que**, à l'étape ii), l'agent d'enduction présente une viscosité qui n'est pas supérieure à 500 mPas, de préférence qui n'est pas supérieure à 300 mPas.

**6.** Procédé selon une ou plusieurs des revendications précédentes, **caractérisé en ce que**, à l'étape partielle ii), pour l'application de l'enduction, on met en oeuvre un agent pour l'enduction de surfaces métalliques, qui contient des composants de résine organique à l'état dissous ou mis en dispersion dans un solvant organique ou dans un mélange de solvants organiques, l'agent étant exempt de pigments électroconducteurs et contenant au moins les composants de résine organique suivants qui peuvent être durcis par voie thermique à une température du substrat dans la plage de 120 à 260 °C :

a) une résine époxyde, présente sous la forme d'un polyéther contenant des groupes hydroxyle, à base d'un produit de polycondensation de bisphénol-épichlorhydrine ;
b) un polyisocyanate aliphatique bloqué ;
c) un polyisocyanate aliphatique non bloqué ;
d) au moins un composant réactionnel choisi parmi des polyesters contenant des groupes hydroxyle et des poly(méth)acrylates contenant des groupes hydroxyle.

**7.** Procédé selon la revendication 6, **caractérisé en ce que** l'agent pour l'enduction de surfaces métalliques contient les composants a) à d) dans les plages quantitatives suivantes en % en poids, rapportés à l'agent dans sa totalité :

a) de 2 à 8 % en poids ;
b) de 2 à 10 % en poids;
c) de 1,5 à 5 % en poids ;
d) de 10 à 25 % en poids.

**8.** Procédé selon une ou plusieurs des revendications 1 à 5, **caractérisé en ce que**, à l'étape partielle ii), pour l'application de l'enduction, on met en oeuvre un agent pour l'enduction de surfaces métalliques, à base de polymères organiques qui peuvent être durcis sous l'influence d'un rayonnement riche en énergie, l'agent étant exempt de pigments électroconducteurs, et l'enduction durcissant sous l'influence d'un rayonnement riche en énergie, de préférence sous l'influence d'un faisceau électronique et d'un rayonnement UV.

**9.** Procédé selon la revendication 8, **caractérisé en ce que** l'agent pour l'enduction de surfaces métalliques contient au moins les composants suivants :

a) au moins un sel ou un complexe d'un acide carboxylique polymérisable à insaturation oléfinique ou d'une molécule que l'on peut obtenir à partir d'un acide carboxylique polymérisable à insaturation oléfinique via une réaction sur le groupe carboxyle, avec au moins un métal choisi parmi le silicium, le titane, le zirconium, le manganèse, le zinc, le vanadium, le molybdène et le tungstène ;
b) un initiateur ou un mélange d'initiateurs pour la polymérisation par radicaux libres et/ou cationique ;
c) au moins un composé polymérisable supplémentaire à insaturation oléfinique comprenant au moins un groupe carboxyle ou un groupe ester.

**10.** Procédé selon l'invocation 9, **caractérisé en ce que** les composants a) et c) sont contenus dans les fractions pondérales suivantes par rapport à la composition totale :

de 1 à 80 % en poids, de préférence de 1 à 40 % en poids du composant a) ;
de 20 à 95 % en poids, de préférence de 40 à 90 % en poids du composant c).

**11.** Procédé selon une ou plusieurs des revendications 1 à 10, **caractérisé en ce que** la tôle métallique ou le ruban métallique est choisi parmi de l'aluminium ou un alliage d'aluminium, du zinc ou un alliage de zinc, de l'acier inoxydable, de l'acier, ou de l'acier enduit avec du zinc, avec de l'aluminium ou bien avec des alliages de zinc ou d'aluminium.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 3412234 C
- EP 573015 A
- DE 3640662 A
- WO 9924515 A
- WO 0185860 A
- DE 19751153
- WO 0069978 A


### In der Beschreibung aufgeführte Nicht-Patentliteratur


- Resistance to cracking on bending. *ECCA-Prüfverfahren T7,* 1996
- Widerstand gegen Rissbildung bei schneller Umformung. *ECCA-Prüfverfahren T5,* 1985